(19) Europäisches Patentamt
European Patent Office
Office européen des brevets

(11) EP 2 505 628 A1

(12) # EUROPEAN PATENT APPLICATION
published in accordance with Art. 153(4) EPC

(43) Date of publication:
**03.10.2012 Bulletin 2012/40**

(21) Application number: **10833187.7**

(22) Date of filing: **22.11.2010**

(51) Int Cl.:
***C09J 7/02** (2006.01)* ***C09J 133/06** (2006.01)*
***C09J 157/12** (2006.01)* ***C09J 201/00** (2006.01)*
***G02B 5/30** (2006.01)*

(86) International application number:
**PCT/JP2010/070843**

(87) International publication number:
**WO 2011/065341 (03.06.2011 Gazette 2011/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.11.2009 JP 2009265860**

(71) Applicant: **Nitto Denko Corporation**
**Osaka 567-8680 (JP)**

(72) Inventors:
- **OKAMOTO, Masayuki**
  **Osaka (JP)**
- **NIWA, Masahito**
  **Osaka (JP)**
- **HIGUCHI, Naoaki**
  **Osaka (JP)**
- **KITANO, Chie**
  **Osaka (JP)**

(74) Representative: **Grünecker, Kinkeldey, Stockmair & Schwanhäusser**
**Leopoldstrasse 4**
**80802 München (DE)**

(54) **DOUBLE-SIDED PRESSURE-SENSITIVE ADHESIVE SHEET FOR OPTICAL USE**

(57) An object of the present invention is to provide a double-coated pressure-sensitive adhesive sheet for optical use satisfying both high corrosion resistance and adhesion reliability. The double-coated pressure-sensitive adhesive sheet for optical use according to the present invention has a pressure-sensitive adhesive layer having a resistance ratio determined by a specific corrosion resistance test of from 90 to 120 and an average air bubble diameter of air bubbles determined by a specific bubbling delamination resistance test of 1.0 mm or less. Further, the double-coated pressure-sensitive adhesive sheet for optical use according to the present invention preferably has a total light transmittance of 90% or more and a haze of 1.5% or less.

FIG. 1

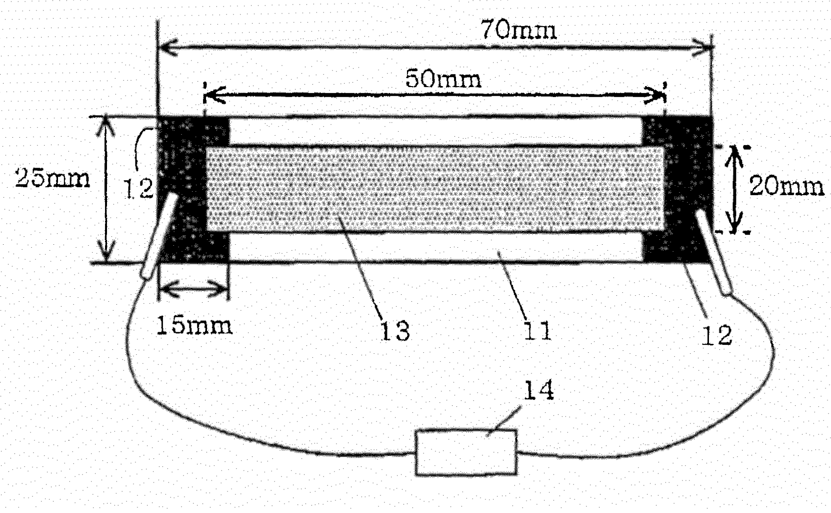




Printed by Jouve, 75001 PARIS (FR)

**Description**

TECHNICAL FIELD

The present invention is related to a double-coated pressure-sensitive adhesive for optical use, satisfying both corrosion resistance and adhesion reliability.

BACKGROUND ART

In recent years, attention is being focused on a configuration where a resin plate such as acrylic plate and polycarbonate plate or a protective plate (protective panel) such as tempered glass, which are excellent in impact resistance, is provided on the surface of an image display panel for the purpose of protecting the image display panel in a flat panel display such as plasma display (PDP), liquid crystal display (LCD), organic EL display, and field emission display (FED).

Many of these protective panels are constructed by providing a hollow wall between the protective panel and the image display panel so that a shock applied to the protective panel on the surface can be kept from being directly transmitted to the image display panel and thereby, breakage can be prevented. However, the presence of a hollow wall layer raises a problem that a ghost image due to multiple reflection is caused or thinning is limited.

Accordingly, a technique of filling the hollow wall between the protective panel and the image display panel with, for example, a pressure-sensitive adhesive layer having high transparency has been recently proposed. In general, it is often the case that an acrylic pressure-sensitive adhesive is used as the pressure-sensitive adhesive excellent in transparency, and a polymer using an acrylic acid ester monomer and, as a cohesive force component, a carboxyl group-containing monomer such as acrylic acid in combination is used as the polymer employed for the acrylic polymer constituting the pressure-sensitive adhesive.

On the other hand, as the trend in the image display system, a touch panel type is attracting enthusiastic attention. However, for example, when the above-described pressure-sensitive adhesive containing a carboxyl group, such as acrylic acid, is used for filling the hollow wall between a front protective panel (serving also to prevent breakage of the image display panel) and an image display panel having provided on the surface thereof a transparent electrode typified by ITO (Indium-Tin Oxide, oxide of indium and tin), it is envisaged that corrosion of the transparent electrode layer occurs with aging and change in electrical resistivity incurs function deterioration of the touch panel.

Furthermore, at the time of attaching a pressure-sensitive adhesive to a resin plate such as acrylic plate and polycarbonate plate, the pressure-sensitive adhesive is often required to have characteristics not allowing for occurrence of delamination or lifting at the adhesive interface due to an air bubble generated from the resin plate (that is, bubbling delamination resistance characteristics) under harsh conditions. In order to meet such a requirement, there is disclosed, for example, an acrylic pressure-sensitive adhesive for optical use, in which a carboxyl group-containing monomer is not contained or is contained in a very slight amount (see, for example, Patent Document 1 and Patent Document 2). In this connection, such an acrylic pressure-sensitive adhesive for optical use is considered to satisfy some corrosion resistance on an ITO transparent electrode and the like. Also, a silicone gel-type pressure-sensitive adhesive sheet for optical use is disclosed (see, Patent Document 3). However, all of these pressure-sensitive adhesives are far from the one having sufficiently high bubbling delamination resistance, compared with a pressure-sensitive adhesive containing a carboxyl group-containing monomer as a monomer component.

In addition, a polarizing plate (optical) pressure-sensitive adhesive using N-vinyl-2-pyrrolidone monomer so as to impart a cohesive force to the pressure-sensitive adhesive is disclosed (see, Patent Document 4), but it is stated that the cohesive force is not sufficient unless a carboxyl group-containing monomer is contained in an amount of at least more than 1 part by weight, and this pressure-sensitive adhesive leaves a concern about the corrosion resistance on an ITO transparent electrode.

Accordingly, it is demanded to develop a pressure-sensitive adhesive satisfying both high corrosion resistance on a transparent electrode such as ITO and sufficient bubbling delamination resistance when attached to various optical functional layers constituting a panel, and being useful particularly for optical applications.

RELATED ART

PATENT DOCUMENT

Patent Document 1: JP-A-2005-298723
Patent Document 2: JP-A-2005-314453

Patent Document 3: JP-A-2006-290960
Patent Document 4: JP-A-5-107410

SUMMARY OF THE INVENTION

PROBLEMS THAT THE INVENTION IS TO SOLVE

Thus, an object of the present invention is to provide a double-coated pressure-sensitive adhesive sheet satisfying both high corrosion resistance and adhesion reliability, particularly, a double-coated pressure-sensitive adhesive sheet satisfying both high corrosion resistance on a transparent electrode such as ITO and adhesion reliability when attached to various optical functional layers constituting a panel.

MEANS FOR SOLVING THE PROBLEMS

As a result of intensive studies to solve the above-described problems, the present inventors have found that a double-coated pressure-sensitive adhesive sheet having a pressure-sensitive adhesive layer in which the resistance ratio determined by a specific corrosion resistance test is from 90 to 120 and the average air bubble diameter of air bubbles determined by a specific bubbling delamination resistance test is 1.0 mm or less, satisfies both characteristics of high corrosion resistance and adhesion reliability, particularly both characteristics of high corrosion resistance on a transparent electrode such as ITO and adhesion reliability to various optical functional layers constituting a panel. The present invention has been accomplished based on this finding.
Accordingly, the present invention has a constitution of the following [1] to [8].

[1] A double-coated pressure-sensitive adhesive sheet for optical use, having a pressure-sensitive adhesive layer having a resistance ratio determined by the following corrosion resistance test of from 90 to 120 and an average air bubble diameter of air bubbles determined by the following bubbling delamination resistance test of 1.0 mm or less:

Corrosion resistance test:

a silver layer is formed in 15 mm at longitudinal both ends of an electrically conductive film (size: 70 mm (length) × 25 mm (width)) to prepare an electrically conductive film having silver layers; the pressure-sensitive adhesive sheet (size: 50 mm (length) × 20 mm (width)) is attached to a center part of the electrically conductive film having silver layers such that an area of contact with one silver layer and an area of contact with another silver layer become the same on a pressure-sensitive adhesive surface provided by the above pressure-sensitive adhesive layer, to prepare a specimen; the specimen is measured for an initial resistance value between silver layers, then the specimen is left standing still for 2 weeks in an environment of a temperature of 60°C and a humidity of 95% RH, and thereafter measured for a resistance value between silver layers after standing still; and a converted value of the resistance value between silver layers after standing still, which is converted assuming that the initial resistance value between silver layers is 100, is taken as the resistance ratio;

Bubbling delamination resistance test:

a 50 μm-thick polyethylene terephthalate film is attached to one pressure-sensitive adhesive surface of the pressure-sensitive adhesive sheet so that the above pressure-sensitive adhesive layer can provide a pressure-sensitive adhesive surface, to prepare a test piece; the test piece is attached to an acrylic plate subjected to a scratch resistance treatment, by pressure-bonding under a pressure of from 0.01 to 1.00 MPa in a form of a scratch resistance-treated surface of the acrylic plate being put into contact with the pressure-sensitive adhesive surface provided by the pressure-sensitive adhesive layer, to obtain a construct where the acrylic plate subjected to the scratch resistance treatment and the 50 μm-thick polyethylene terephthalate film are joined through the pressure-sensitive adhesive sheet; and the construct is left standing still for 1 day in an environment of 50°C, further left standing still for 4 days in an environment of 80°C, and determined for an average air bubble diameter of air bubbles generated at an interface between the scratch resistance-treated surface of the acrylic plate and the pressure-sensitive adhesive layer. In this case, when no air bubble is produced, the average air bubble diameter is 0.

[2] The double-coated pressure-sensitive adhesive sheet for optical use according to the above [1], having a total light transmittance of 90% or more and a haze of 1.5% or less.

[3] The double-coated pressure-sensitive adhesive sheet for optical use according to the above [1] or [2], in which the pressure-sensitive adhesive layer is an acrylic pressure-sensitive adhesive layer.

[4] The double-coated pressure-sensitive adhesive sheet for optical use according to the above [3], in which the pressure-sensitive adhesive layer is formed of an acrylic polymerizable composition containing a monomer mixture or a partial polymerization product thereof, the monomer mixture containing the following monomer (ml), the following monomer (m2) and the following monomer (m3) or containing the following monomer (ml), the following monomer (m2), the following monomer (m3) and the following monomer (m4), with the monomer contents of from 35 to 97.5 wt% of monomer (ml), from 2 to 40 wt% of monomer (m2), from 0.1 to 25 wt% of monomer (m3) and from 0 to 30 wt% of monomer (m4):

(ml) an alkyl (meth)acrylate monomer having an alkyl group with a carbon number of 1 to 12, represented by the following formula (1):

[Chem. 1] $CH_2=C(R^1)COOR^2$ (1)

(in formula (1), $R^1$ represents a hydrogen atom or a methyl group, and $R^2$ represents an alkyl group having a carbon number of 1 to 12);

(m2) a vinyl monomer having a nitrogen atom in its skeleton (excluding monomer ($m^3$));

($m^3$) an N-hydroxyalkyl(meth)acrylamide monomer having a hydroxyalkyl group with a carbon number of 1 to 4; and

(m4) a monomer copolymerizable with the monomer (m1) to monomer (m3).

[5] The double-coated pressure-sensitive adhesive sheet for optical use according to the above [4], in which the (m2) vinyl monomer having a nitrogen atom in its skeleton is one or two or more monomers selected from an N-vinyl cyclic amide represented by the following formula (2) and (meth)acrylamides;

[Chem. 2]

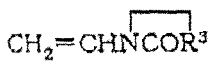 (2)

(in formula (2), $R^3$ represents a divalent organic group).

[6] The double-coated pressure-sensitive adhesive sheet for optical use according to the above [4] or [5], in which the (m3) N-bydroxyalkyl(meth)acrylamide monomer having a hydroxyalkyl group with a carbon number of 1 to 4 is a monomer represented by the following formula (3):

[Chem. 3] $CH_2=C(R^4)CONR^5R^6$ (3)

(in formula (3), $R^4$ represents a hydrogen atom or a methyl group, $R^5$ represents a hydroxyalkyl group having a carbon number of 1 to 4, and $R^6$ represents a hydrogen atom or a saturated or unsaturated hydrocarbon group having a carbon number of 1 to 10).

[7] The double-coated pressure-sensitive adhesive sheet for optical use according to any one of the above [4] to [6], in which the monomer mixture of the acrylic polymerizable composition contains substantially no carboxyl group-containing monomer.

[8] The double-coated pressure-sensitive adhesive sheet for optical use according to any one of the above [3] to

[7], in which the acrylic pressure-sensitive adhesive layer has a gel fraction of from 20 to 90 wt%.

ADVANTAGE OF THE INVENTION

The double-coated pressure-sensitive adhesive sheet for optical use of the present invention has the configurations above and therefore, satisfies both high corrosion resistance and adhesion reliability, particularly both high corrosion resistance on a transparent electrode such as ITO and adhesion reliability when attached to various optical functional layers constituting a panel.

BRIEF DESCRIPTION OF THE DRAWINGS

[Fig. 1] Fig. 1 is an explanatory view of a corrosion resistance test.
[Fig. 2] Fig. 2 is a schematic cross-sectional view illustrating one example of a capacitance-type touch panel fabricated by laminating together optical members (optical functional layers) with use of the double-coated pressure-sensitive adhesive sheet for optical use of the present invention.
[Fig. 3] Fig. 3 is a schematic cross-sectional view illustrating one example of a capacitance-type touch panel fabricated by laminating together optical members (optical functional layers) with use of the double-coated pressure-sensitive adhesive sheet for optical use of the present invention.
[Fig. 4] Fig. 4 is a schematic cross-sectional view illustrating one example of a resistive touch panel fabricated by laminating together optical members (optical functional layers) with use of the double-coated pressure-sensitive adhesive sheet for optical use of the present invention.

MODE FOR CARRYING OUT THE INVENTION

The double-coated pressure-sensitive adhesive sheet for optical use of the present invention has at least a pressure-sensitive adhesive layer having a resistance ratio determined by the corrosion resistance test of from 90 to 120 and an average air bubble diameter of air bubbles determined by the bubbling delamination resistance test of 1.0 mm or less. Therefore, the double-coated pressure-sensitive adhesive sheet for optical use of the present invention satisfies both high corrosion resistance and adhesion reliability, particularly both high corrosion resistance on a transparent electrode such as ITO and adhesion reliability when attached to various optical functional layers constituting a panel. Accordingly, the double-coated pressure-sensitive adhesive sheet for optical use of the present invention can be suitably used for optical applications, for example, an application in laminating together various optical members (various optical functional layers) or an application in fixing various optical members (various optical functional layers) to a predetermined site.

Also, the double-coated pressure-sensitive adhesive sheet for optical use of the present invention has adhesive reliability, because good adhesiveness to an adherend is exerted and generation of an air bubble at the adhesion interface, giving rise to "delamination" or "lifting" from the adherend, is suppressed.

Incidentally, in the present application, the "pressure-sensitive adhesive layer having a resistance ratio determined by the corrosion resistance test of from 90 to 120 and an average air bubble diameter of air bubbles determined by the bubbling delamination resistance test of 1.0 mm or less" is sometimes referred to as a "specific pressure-sensitive adhesive layer (specific adhesive layer)".

The double-coated pressure-sensitive adhesive sheet for optical use of the present invention is a double-coated pressure-sensitive adhesive sheet (double-coated adhesive sheet) where both surfaces of the sheet are a pressure-sensitive adhesive surface (adhesive surface). In the double-coated pressure-sensitive adhesive sheet for optical use of the present invention, at least one surface of the pressure-sensitive adhesive surfaces is provided by the specific pressure-sensitive adhesive layer. Also, the double-coated pressure-sensitive adhesive sheet for optical use of the present invention may be of a substrate-less type where one specific pressure-sensitive adhesive layer provides both pressure-sensitive adhesive surfaces, of a substrate-attached type where the specific pressure-sensitive adhesive layer provided on both surfaces of a substrate provides a pressure-sensitive adhesive surface, or of a substrate-attached type where each of the specific pressure-sensitive adhesive layer provided on one surface of a substrate and a normal pressure-sensitive adhesive layer (a pressure-sensitive adhesive layer other than the specific pressure-sensitive adhesive layer above) provided on another surface of the substrate provides a pressure-sensitive adhesive surface. Furthermore, the pressure-sensitive adhesive surface of the double-coated pressure-sensitive adhesive sheet for optical use of the present invention may be protected by the later-described release film until use. Incidentally, the "pressure-sensitive adhesive sheet" as used in the present invention includes a tape form in addition to a sheet form, that is, includes also a "pressure-sensitive adhesive tape".

(Specific Pressure-Sensitive Adhesive Layer)

In the double-coated pressure-sensitive adhesive sheet for optical use of the present invention, the specific pressure-sensitive adhesive layer is, as described above, a pressure-sensitive adhesive layer in which the resistance ratio determined by the corrosion resistance test is from 90 to 120 and at the same time, the average air bubble diameter of air bubbles determined by the bubbling delamination resistance test is 1.0 mm or less, and provides at least one pressure-sensitive adhesive surface.

Such a specific pressure-sensitive adhesive layer is formed by polymerizing and curing a composition containing a monomer mixture or a partial polymerization product thereof. Incidentally, in the present application, the "composition containing a monomer mixture or a partial polymerization product thereof", forming the specific pressure-sensitive adhesive layer is sometimes referred to as a "polymerizable composition".

In the double-coated pressure-sensitive adhesive sheet for optical use of the present invention, the resistance ratio of the specific pressure-sensitive adhesive layer, determined by the corrosion resistance test is from 90 to 120, preferably from 92 to 118, and more preferably from 95 to 115. If the resistance ratio is less than 90, the functions of various optical members (various optical functional layers) (for example, a touch panel) using the pressure-sensitive adhesive sheet may not be properly exerted, whereas if the resistance ratio exceeds 120, the functions of various optical members (various optical functional layers) (for example, a touch panel) using the pressure-sensitive adhesive sheet may not be properly exerted.

The corrosion resistance test of the pressure-sensitive adhesive layer is performed as follows. First, a silver layer (silver electrode part) is formed in 15 mm at longitudinal both ends of an electrically conductive film ("ELECRYSTA", trade name, produced by Nitto Denko Corporation; size: 70 mm (length) × 25 mm (width)) to obtain an electrically conductive film having silver layers. A pressure-sensitive adhesive sheet (size: 50 mm (length) × 20 mm (width)) is attached to the center part of the electrically conductive film having silver layers such that the area of contact with one silver layer and the area of contact with another silver layer become the same on the pressure-sensitive adhesive surface provided by the pressure-sensitive adhesive layer, to prepare a specimen. Next, the specimen is measured for the initial resistance value between silver layers, and then the specimen is left standing still for 2 weeks in an environment of a temperature of 60°C and a humidity of 95% RH, and thereafter measured for the resistance value between silver layers after standing still. The converted value of the resistance value between silver layers after standing still, which is converted assuming that the initial resistance value between silver layers is 100, is taken as the resistance ratio.

Fig. 1 shows an explanatory view of the corrosion resistance test. In Fig. 1, numeral 11 is an electrically conductive film, numeral 12 is a silver layer (silver electrode part), numeral 13 is a test piece, and numeral 14 is a tester for measuring the resistance value between silver layers. The specimen is constructed of the electrically conductive film 11, the silver layers (silver electrode parts) 12 and the test piece 13. As shown in Fig. 1, in the specimen of the corrosion resistance test, the test piece 13 is located at the center part of the electrically conductive film 11 such that the area of contact with one silver layer 12 and the area of contact with another silver layer 12 become the same on the pressure-sensitive adhesive surface, the longitudinal direction of the electrically conductive film 11 coincides with the longitudinal direction of the test piece 13 and furthermore, the width direction of the electrically conductive film 11 coincides with the width direction of the test piece 13.

In the double-coated pressure-sensitive adhesive sheet for optical use of then present invention, the average air bubble diameter of air bubbles of the specific pressure-sensitive adhesive layer, determined by the bubbling delamination resistance test is 1.0 mm or less (for example, from 0 to 1.0 mm), preferably from 0 to 0.8 mm, and more preferably from 0 to 0.6 mm. If the average air bubble diameter of air bubbles determined by the bubbling delamination resistance test exceeds 1 mm, the functions of various optical members (various optical functional layers) using the pressure-sensitive adhesive sheet may not be properly exerted. For example, the appearance of the image display part of a touch panel may be impaired. Incidentally, in the double-coated pressure-sensitive adhesive sheet for optical use of the present invention, the average air bubble diameter of air bubbles of the specific pressure-sensitive adhesive layer, determined by the bubbling delamination resistance test is most preferably 0 that indicates no generation of an air bubble.

The bubbling delamination resistance test of the pressure-sensitive adhesive layer is performed as follows. First, a 50 μm-thick polyethylene terephthalate film is attached to one pressure-sensitive adhesive surface of the pressure-sensitive adhesive sheet so that the pressure-sensitive adhesive layer used for the bubbling delamination resistance test can provide a pressure-sensitive adhesive surface, to prepare a test piece. Next, the test piece is attached to an acrylic plate subjected to a scratch resistance treatment ("ACRYLATE MR200", trade name, produced by Mitsubishi Rayon Co., Ltd.), by pressure-bonding under a pressure of from 0.01 to 1.00 MPa in the form of the scratch resistance-treated surface of the acrylic plate being put into contact with the pressure-sensitive adhesive surface provided by the pressure-sensitive adhesive layer used for the bubbling delamination resistance test, to obtain a construct where the acrylic plate subjected to a scratch resistance treatment and the 50 μm-thick polyethylene terephthalate film are joined through the pressure-sensitive adhesive sheet. The construct is left standing still for 1 day in an environment of 50°C, further left standing for 4 days in an environment of 80°C, and determined for the average air bubble diameter of air

bubbles generated at the interface between the scratch resistance-treated surface of the acrylic plate and the pressure-sensitive adhesive layer. Incidentally, when no air bubble generates, the average air bubble diameter is 0.

The specific pressure-sensitive adhesive layer of the double-coated pressure-sensitive adhesive sheet for optical use of the present invention is not particularly limited as long as the resistance ratio determined by the corrosion resistance test is from 90 to 120 and the average air bubble diameter of air bubbles determined by the bubbling delamination resistance test is 1.0 mm or less. Examples thereof include an acrylic pressure-sensitive adhesive layer, a rubber-based pressure-sensitive adhesive layer, a vinyl alkyl ether-based pressure-sensitive adhesive layer, a silicone-based pressure-sensitive adhesive layer, a polyester-based pressure-sensitive adhesive layer, a polyamide-based pressure-sensitive adhesive layer, a urethane-based pressure-sensitive adhesive layer, a fluorine-based pressure-sensitive adhesive layer, and an epoxy-based pressure-sensitive adhesive layer.

Above all, in the double-coated pressure-sensitive adhesive sheet for optical use of the present invention, the specific pressure-sensitive adhesive layer is preferably an acrylic pressure-sensitive adhesive layer in view of easiness to control required physical properties (for example, the resistance ratio determined by the corrosion resistance test and the average air bubble diameter of air bubbles determined by the bubbling delamination resistance test), convenience of production, and advantage in cost.

The acrylic pressure-sensitive adhesive layer contains an acrylic polymer as a main component. If desired, optional components (for example, a polymer other than the acrylic polymer, and an additive) may be contained as long as the effects of the present invention are not impaired.

In the acrylic pressure-sensitive adhesive layer, the acrylic polymer as a main component is preferably contained in an amount of at least 40 wt% or more (for example, from 40 to 100 wt%), and more preferably 70 wt% or more (for example, from 70 to 100 wt%), based on the entire amount of the acrylic pressure-sensitive adhesive layer. The acrylic pressure-sensitive adhesive layer may be composed of only the acrylic polymer as a main component.

In the present invention, as described above, the acrylic pressure-sensitive adhesive layer as the specific pressure-sensitive adhesive layer is formed of a polymerizable composition containing a mixture in which the main component is an acrylic monomer, or a partial polymerization product thereof. Incidentally, in the present application, the polymerizable composition for forming the acrylic pressure-sensitive adhesive layer is sometimes referred to as an "acrylic polymerizable composition".

The acrylic polymerizable composition may contain, in addition to the monomer mixture or a partial polymerization product thereof, optional components (for example, a polymer other than the acrylic polymer, and an additive) as long as the effects of the present invention are not impaired.

Particularly, in the double-coated pressure-sensitive adhesive sheet for optical use of the present invention, the acrylic pressure-sensitive adhesive layer as the specific pressure-sensitive adhesive layer is preferably an acrylic pressure-sensitive adhesive layer formed of an acrylic polymerizable composition containing a monomer mixture or a partial polymerization product thereof, the monomer mixture containing the following monomer (ml), monomer (m2) and monomer (m3) or containing monomer (ml), monomer (m2), monomer (m3) and monomer (m4), with the monomer contents of from 35 to 97.5 wt% of monomer (ml), from 2 to 40 wt% of monomer (m2), from 0.1 to 25 wt% of monomer (m3) and from 0 to 30 wt% of monomer (m4), from the standpoint that repulsion resistance, bubbling delamination resistance characteristics, initial lamination property to an adherend in an ordinary temperature environment or a low-temperature environment (for example, approximately from 0 to 10°C), shock absorption property, high transparency, flexibility, and processability, as well as high corrosion resistance and adhesion reliability can be achieved, particularly, from the standpoint that repulsion resistance as well as high corrosion resistance and adhesion reliability can be achieved.

(m1) An alkyl (meth)acrylate monomer having an alkyl group with a carbon number of 1 to 12, represented by the following formula (1):

[Chem. 4] $CH_2$-C($R^1$)COO$R^2$ (1)

(in formula (1), $R^1$ represents a hydrogen atom or a methyl group, and $R^2$ represents an alkyl group having a carbon number of 1 to 12).

(m2) A vinyl monomer having a nitrogen atom in its skeleton (excluding monomer (m3)).

(m3) An N-hydroxyalkyl(meth)acrylamide monomer having a hydroxyalkyl group with a carbon number of 1 to 4.

(m4) A monomer copolymerizable with the monomers (m1) to (m3).

Incidentally, in the present application, the "acrylic polymerizable composition containing a monomer mixture or a partial polymerization product thereof, the monomer mixture containing monomer (m1), monomer (m2) and monomer (m3) or containing monomer (m1), monomer (m2), monomer (m3) and monomer (m4), with the monomer contents of from 35 to 97.5 wt% of monomer (m1), from 2 to 40 wt% of monomer (m2), from 0.1 to 25 wt% of monomer (m3) and from 0 to 30 wt% of monomer (m4)" is sometimes referred to as a "specific acrylic polymerizable composition".

As described above, the acrylic pressure-sensitive adhesive layer as the specific pressure-sensitive adhesive

layer obtained from the specific acrylic polymerizable composition exerts particularly repulsion resistance as well as high corrosion resistance and adhesion reliability and therefore, is advantageous in that an optical member (optical functional layer) using the pressure-sensitive adhesive sheet having the acrylic pressure-sensitive adhesive layer is free from lifting or delamination of the optical member during use and is less likely to cause optical unevenness. In particular, the acrylic pressure-sensitive adhesive layer has a benefit that even when a bending stress or a twisting or squeezing stress is applied to the optical member (optical functional layer), it is excellent in adhesiveness and lifting or delamination of the optical member is suppressed.

That is, it is preferred that the double-coated pressure-sensitive adhesive sheet for optical use of the present invention has a pressure-sensitive adhesive layer in which the resistance ratio determined by the corrosion resistance test is from 90 to 120 and the average air bubble diameter of air bubbles determined by the bubbling delamination resistance test is 1.0 mm or less, and in which the pressure-sensitive adhesive layer is formed of an acrylic polymerizable composition containing a monomer mixture or a partial polymerization product thereof, the monomer mixture containing monomer (m1), monomer (m2) and monomer (m3) or containing monomer (m1), monomer (m2), monomer (m3) and monomer (m4), with the monomer contents of from 35 to 97.5 wt% of monomer (m1), from 2 to 40 wt% of monomer (m2), from 0.1 to 25 wt% of monomer (m3) and from 0 to 30 wt% of monomer (m4).

In the specific acrylic polymerizable composition, the monomer component constituting the monomer mixture includes monomer (m1), monomer (m2), monomer (m3) and monomer (m4). Of these monomers, monomer (m1), monomer (m2) and monomer (m3) are essential components, and monomer (m4) is an optical component used, if desired.

Also, in the specific acrylic polymerizable composition, when monomer (m4) as an optional component is used as the monomer component constituting the monomer mixture, the total amount of monomer (m1), monomer (m2) and monomer (m3) as essential components is preferably 70 wt% or more (for example, from 70 to 95 wt%), and more preferably 80 wt% or more (for example, from 80 to 95 wt%), based on the entire amount of constituent monomer components. Because, if the total amount of monomer (m1), monomer (m2) and monomer (m3) is less than 70 wt%, the pressure-sensitive adhesive surface provided by the specific pressure-sensitive adhesive layer may have a problem in the adhesion reliability to an adherend.

Examples of the (m1) alkyl (meth)acrylate monomer having an alkyl group (linear or branched alkyl group) with a carbon number of 1 to 12, represented by formula (1) include methyl (meth)acrylate, ethyl (meth)acrylate, n-propyl (meth)acrylate, isopropyl (meth)acrylate, n-butyl (meth)acrylate, isobutyl (meth)acrylate, see-butyl (meth)acrytate, tert-butyl (meth)acrylate, pentyl (meth)acrylate, isopentyl (meth)acrylate, hexyl (meth)acrylate, heptyl (meth)acrylate, n-octyl (meth)acrylate, isooctyl (meth)acrylate, 2-ethylhexyl (meth)acrytate, nonyl (meth)acrylate, isononyl (meth)acrylate, decyl (meth)acrylate, isodecyl (meth)acrylate, undecyl (meth)acrylate, and dodecyl (meth)acrylate. Among these, an alkyl (meth)acrylate monomer having an alkyl group (linear or branched alkyl group) with a carbon number of 4 to 12 is preferred, and particularly, n-butyl (meth)acrylate, 2-ethylhexyl (meth)acrylate, isooctyl (meth)acrylate, and isononyl (meth)acrylate are more preferred. In this connection, the (ml) alkyl (meth)acrylate monomer having an alkyl group with a carbon number of 1 to 12, represented by formula (1), may be used alone, or may be used in combination of two or more thereof.

In the monomer mixture of the specific acrylic polymerizable composition, the content of monomer (ml) is from 35 5 to 97.5 wt%, preferably from 45 to 95 wt%, and more preferably from 55 to 90 wt%, based on the entire amount of monomers constituting the monomer mixture. If the content is less than 35 wt%, there may arise, for example, in the pressure-sensitive adhesive surface provided by the specific pressure-sensitive adhesive layer, a problem that initial lamination property in an ordinary temperature or low-temperature environment is impaired, or a problem that the shock absorbing function of the specific pressure-sensitive adhesive layer is reduced. On the other hands, if the content exceeds 97.5 wt%, there may arise, for example, a problem that adhesion reliability to an adherend is impaired in the pressure-sensitive adhesive surface provided by the specific pressure-sensitive adhesive layer due to lack of monomer (m2) and monomer (m3), or a problem that processability of the pressure-sensitive adhesive sheet is reduced. Also, lack of monomer (m3) may adversely affect the repulsion resistance in the specific pressure-sensitive adhesive layer.

The (m2) vinyl monomer having a nitrogen atom in its skeleton is a monomer having at least one carbon-carbon double bond and a nitrogen atom in the molecule (in the molecular skeleton). Incidentally, the (m3) N-hydroxyalkyl (meth) acrylamide monomer having a hydroxyalkyl group with a carbon number of 1 to 4 is not included in monomer (m2). In the present application, the "vinyl monomer having a nitrogen atom in its skeleton" is sometimes referred to as a "nitrogen-containing vinyl monomer".

When the (m2) nitrogen-containing vinyl monomer is used, the pressure-sensitive adhesive force (adhesive force), cohesive force and the like of the specific pressure-sensitive adhesive layer can be enhanced. The later-described monomer (m3) has poor compatibility with monomer (m1), but addition of monomer (m2) provides an effect of enhancing the compatibility.

The (m2) nitrogen-containing vinyl monomer includes more specifically one or two or more monomers selected from an N-vinyl cyclic amide represented by the following formula (2) and (meth)acrylamides:

[Chem. 5]

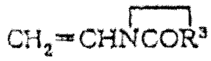 (2)

(in formula (2), $R^3$ represents a divalent organic group).

In formula (2), $R^3$ is preferably a saturated or unsaturated hydrocarbon group, more preferably a saturated hydrocarbon group (for example, an alkylene group having a carbon number of 3 to 5).

Examples of the N-vinyl cyclic amide represented by formula (2) include N-vinyl-2-pyrrolidone, N-vinyl-2-piperidone, N-vinyl-3-morpholinone, N-vinyl-2-caprolactam, and N-vinyl-3,5-morpholinedione. Among these, N-vinyl-2-pyrrolidone and N-vinyl-2-caprolactam are preferred.

Examples of the (meth)acrylamides include (meth)acrylamide, N-alkyl(meth)acylamides, and N,N-dialkyl(meth)acrylamides, Examples of the N-alkyl(meth)acrylamides include N-ethyl(meth)acrylamide, N-n-butyl(meth)acrylamide, and N-octyl(meth)acrylamide. Other examples include an amino group-containing (meth)acrylamides such as dimethylaminoethyt(meth)acrylamide and diethylaminoethyl(meth)acrylamide. Examples of the N,N-dialkyl(meth)acrylamides include N,N-dimethyl(meth)acrylamide, N,N-diethyl(meth)acrylamide, N,N-dipropyl(meth)acrylamide, N,N-diisopropyl (meth)acrylamide, N,N-di(n-butyl)(meth)acrylamide, and N,N-di(tert-butyl)(meth)acrylamide. Above all, use of a (meth) acrylamide one or two N-alkyl groups with a carbon number of 1 to 4 (more preferably 1 or 2) (for example, an N,N'-dialkyl(meth)acrylamide such as N,N-diethyl(meth)acrylamide and N,N-dimethyl(meth)acrylamide is preferred from the standpoint that it is easy to balance adhesion reliability on the adhesive-sensitive surface provided by the specific pressure-sensitive adhesive layer and flexibility of the specific pressure-sensitive Adhesive layer.

Examples of the nitrogen-containing vinyl monomer other than the N-vinyl cyclic amides and (meth)acrylamides include a cyclic (meth)acrylamide having an N-(meth)acryloyl group, such as (meth)acryloylmorpholine, (meth)acryloylpyrrolidone and (meth)acryloylpyrrolidine; a monomer having an amino group, such as aminoethyl (meth)acrylate, N,N-dimethylaminoethyl (meth)acrylate and N,N-dimethylaminopropyl (meth)acrylate; a monomer having a maleimide skeleton, such as N-cyclohexylmaleimide and N-phenylmaleimide; an itaconimide-based monomer such as N-methylitaconimide, N-ethylitaconimide, N-butylitaconimide, N-2-ethylhexylitaconimide, N-laurylitaconimide and N-cyclohexylitaconimide; a cyanoacrylate-based monomer such as acrylonitrile and methacrylonitrile; a succinimide-based monomer such as N-(meth)acryloyloxymethylene succinimide, N-(meth)acryloyl-6-oxyhexamethylene succinimide and N-(meth) acryloyl-8-oxyoctamethylene succinimide; and a nitrogen-containing cyclic monomer such as N-vinyl-1,3-oxazin-2-one, N-vinylpyridine, N-vinylpyrimidine, N-vinylpiperazine and N-vinylpyrrole.

Incidentally, when an N-vinyl cyclic amide represented by formula (2) and the above (meth)acrylamides are used in combination as the (m2) nitrogen-containing vinyl monomer, this is useful in that it is easy to balance the characteristics of pressure-sensitive adhesive force, cohesive force, flexibility and processability of the specific pressure-sensitive adhesive layer.

In the monomer mixture of the specific acrylic polymerizable composition, the content of the (m2) nitrogen-containing vinyl monomer is from 2 to 40 wt%, preferably from 2.5 to 35 wt%, and more preferably 3 to 30 wt%, based on the entire amount of monomers constituting the monomer mixture. If the content is less than 2 wt%, there may arise a problem that, for example, processability of the pressure-sensitive adhesive sheet is impaired, or a problem that adhesion reliability on the pressure-sensitive adhesive surface provided by the specific pressure-sensitive adhesive layer can be hardly achieved, whereas if the content exceeds 40 wt%, there may arise a problem that, for example, flexibility of the specific pressure-sensitive adhesive layer is reduced, or a problem that tack of the specific pressure-sensitive adhesive layer is reduced.

The (m3) N-hydroxyalkyl(meth)acrylamide monomer having a hydroxyalkyl group with a carbon number of 1 to 4 can enhance durability against a phenomenon in which a fixed force is applied for a long time as in the repulsion resistance or bubbling delamination resistance test. That is, in the present invention, since monomer (m3) is used in the monomer mixture of the specific acrylic polymerizable composition, the acrylic pressure-sensitive adhesive layer as the specific pressure-sensitive adhesive layer obtained from the specific acrylic polymerizable composition exerts particularly a repulsion resistance, in addition to high corrosion resistance and adhesion reliability.

In the present invention, monomer (m2) and monomer (m3) are used in combination as the monomer other than monomer (ml) in the monomer mixture of the specific acrylic polymerizable composition. As described above, monomer (m3) which is effective in increasing repulsion resistance of the pressure-sensitive adhesive layer is originally poor in compatibility with monomer (m1), but this monomer is contained together with monomer (m2), whereby compatibility with monomer (m1) is increased. Accordingly, in the present invention, the combination use of monomer (m2) and monomer (m3) as the monomer other than monomer (m1) in the monomer mixture of the specific acrylic polymerizable composition also contributes to the exertion of repulsion resistance in the acrylic pressure-sensitive adhesive layer as

the specific pressure-sensitive adhesive layer obtained from the specific acrylic polymerizable composition.

Furthermore, the (m3) N-hydroxyalkyl(meth)acrylamide monomer having a hydroxyalkyl group with a carbon number of I to 4 has a hydroxyl group as a reactive functional group and therefore, by allowing it to react with a crosslinking agent having an isocyanate group, an epoxy group or the like, a crosslinking structure can be made up. Incidentally, in the present application, monomer (m3) is in common with monomer (m2) on the point of having a carbon-carbon double bond in its molecular skeleton and at the same time, having a nitrogen atom but is excluded from monomer (m2). Monomer (m3) may be used alone, or may be used in combination of two or more thereof.

The (m3) N-hydroxyalkyl(meth)acrylamide monomer having a hydroxyalkyl group with a carbon number of 1 to 4 is preferably represented by the following formula (3):

[Chem. 6] $CH_2\text{-}C(R^4)CONR^5R^6$ (3)

(in formula (3), $R^4$ represents a hydrogen atom or a methyl group, $R^5$ represents a hydroxyalkyl group having a carbon number of 1 to 4, and $R^6$ represents a hydrogen atom or a saturated or unsaturated hydrocarbon group having a carbon number of 1 to 10).

In formula (3), the hydroxyalkyl group $R^5$ may have a linear chain structure or may have a branched chain structure.

Examples of monomer (m3) include N-methylol(meth)acrylamide, N-(2-hydroxyethyl)acrylamide, N-(2-hydroxyethyl)methacrylamide, N-(2-hydroxypropyl)acrylamide, N-(2-hydroxypropyl)methacrylamide, N-(1-hydroxypropyl)acrylamide, N-(1-hydroxypropyl)methacrylamide, N-(3-hydroxypropyl)acrylamide, N-(3-hydroxypropyl)methacrylamide, N-(2-hydroxybutyl)acrylamide, N-(2-hydroxybutyl)methacrylamide, N-(3-hydroxybutyl)acrylamide, N-(3-hydroxybutyl) methacrylamide, N-(4-hydroxybutyl)acrylamide, N-(4-hydroxybutyl)methacrylamide, and N-methyl-N-2-hydroxyethyl (meth)acrylamide. Among these, from the standpoint of obtaining the specific pressure-sensitive adhesive layer well balanced in hydrophilicity and hydrophobicity, well balanced in the pressure-sensitive adhesive properties and particularly excellent in the repulsion resistance, N-(2-hydroxyethyl)acrylamide, N-(2-hydroxyethyl)methacrylamide, N-methylol (meth)acrylamide, N-(3-hydroxypropyl) acrylamide and the like are preferred, and N-(2-hydroxyethyl)acrylamide, N-(2-hydroxyethyl)methacrylamide and N-methylol(meth)acrylamide are more preferred.

In the monomer mixture of the specific acrylic polymerizable composition, the content of monomer (m3) is from 0.1 to 25 wt%, preferably from 0.2 to 15 wt%, and more preferably from 0.3 to 10 wt%, based on the entire amount of monomers constituting the monomer mixture. If the content is less than 0,1 wt%, there may arise a problem that, for example, adhesion reliability to an adherend can be hardly achieved on the pressure-sensitive adhesive surface provided by the specific pressure-sensitive adhesive layer. For example, repulsion resistance may not be exerted in the specific pressure-sensitive adhesive layer, allowing easy occurrence of "lifting" or "delamination" after attachment to an adherend. On the other hand, if the content exceeds 25 wt%, this may be disadvantageous in that monomer (m3) is not compatibilized with monomer (m1) and transparency is decreased (that is, optical characteristics are impaired). Also, repulsion resistance may be reduced.

In the present invention, in the monomer mixture of the specific acrylic polymerizable composition, monomer (m4) (sometimes, simply referred to as "copolymerizable monomer") copolymerizable with monomer (m1), monomer (m2) and monomer (m3) may be used together with monomer (m1), monomer (m2) and monomer (m3). When the (m4) copolymerizable monomer is used, for example, compatibility of monomer (m3) may be enhanced, or the specific pressure-sensitive adhesive layer may be more successfully balanced in adhesion characteristics, flexibility, processability, transparency and the like.

The (m4) copolymerizable monomer includes a compound having one ethylenically unsaturated group, and examples thereof include a hydroxyl group-containing monomer such as 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate and (4-hydroxymethylcyclohexyl)-methyl(meth)acrylate; a sulfonic acid group-containing monomer such as 2-acrylamide-2-methylpropanesulfonic acid and sulfopropyl acrylate; a phosphoric acid group-containing monomer such as 2-hydroxyethylacryloyl phosphate; a vinyl monomer such as vinyl acetate, N-vinylcarboxylic acid amides and styrene; an (meth) acrylic acid ester monomer such as glycidyl (meth)acrylate, tetrahydrofurfuryl (meth)acrylate, polyethylene glycol (meth)acrylate, polypropylene glycol (meth)acrylate, fluorine (meth) acrylate, silicon (meth)acrylate, and 2-methoxyethyl (meth) acrylate; an alkyl (meth)acrylate having an alkyl group, different from the alkyl (meth)acrylate constituting the main component, such as methyl (meth)acrylate and octadecyl (meth)acrylate; and an alicyclic (meth) acrylate such as isobornyl (meth)acrylate. One or two or more of these copolymerizable monomers may be used. Incidentally, a polyfunctional (meth)acrylate as the later-described crosslinking component is not included in monomer (m4).

Above all, from the standpoint that the specific pressure-sensitive adhesive layer is liable to be balanced in adhesion reliability, flexibility, processability and transparency, the (m4) copolymerizable monomer is preferably 2-hydroxyethyl (meth)acrylate, 4-hydroxybutyl (meth)acrylate or 2-methoxyethyl acrylate, more preferably 4-hydroxybutyl (meth)acrylate or 2-methoxyethyl acrylate.

In the present invention, it is preferred that the monomer mixture of the specific acrylic polymerizable composition does not substantially contain, as the (m4) copolymerizable monomer, a carboxyl group-containing monomer [for example, an ethylenically unsaturated monocarboxylic acid (e.g., acrylic acid, methacrylic acid, crotonic acid, carboxyethyl acrylate, carboxypentyl acrylate), an ethylenically unsaturated dicarboxylic acid (e.g., maleic acid, itaconic acid, citraconic acid), and an ethylenically unsaturated dicarboxylic acid anhydride (e.g., maleic anhydride, itaconic anhydride); particularly, an acrylic acid]. Because, in the case of attaching the pressure-sensitive adhesive sheet to an adherend in the form that the pressure-sensitive adhesive surface provided by an acrylic pressure-sensitive adhesive layer formed of the specific acrylic polymerizable composition is put into contact with the adherend, corrosion due to an acid component may occur depending on the adherend. Incidentally, the "carboxyl group-containing monomer" indicates a vinyl monomer (ethylenically unsaturated monomer) having at least one carboxyl group (may be in an anhydride form) per molecule.

The expression "does not substantially contain" above means that the monomer is not contained at all in the monomer mixture of the specific acrylic polymerizable composition or the content thereof is 0.1 wt% or less based on the entire amount of the constituent monomer component.

In the case where monomer (m4) is used, the amount of monomer (m4) in the monomer mixture of the specific acrylic polymerizable composition is preferably 30 wt% or less (for example, from 1 to 30 wt%), and more preferably 25 wt% or less (for example, from 1 to 25 wt%), based on the entire amount of monomers constituting the monomer mixture. If the content exceeds 30 wt%, there may arise a problem in terms of balance between adhesion reliability of the pressure-sensitive adhesive surface provided by the specific pressure-sensitive adhesive layer and flexibility of the specific pressure-sensitive adhesive layer.

In this way, in the present invention, monomer (m1), monomer (m2) and monomer (m3) are essential in the monomer mixture of the specific acrylic polymerizable composition. That is, monomer (m2) and monomer (m3) are used in combination as the monomer component other than monomer (m1). Therefore, the acrylic pressure-sensitive adhesive layer formed of the specific acrylic polymerizable composition can be enhanced in cohesive force and can exert excellent adhesion reliability to an adherend. That is, in the present invention, even when a carboxyl group-containing monomer as the copolymerizable monomer is substantially not contained in the monomer mixture of the specific acrylic polymerizable composition, cohesive force can be enhanced and excellent adhesion reliability to an adherence can be exerted, similarly to the case of using a carboxyl group-containing monomer.

On this account, in the present invention, monomer (m1) and specific nitrogen-containing monomers, that is, monomer (m2) and monomer (m3) are used while substantially not containing an acid component, whereby the pressure-sensitive adhesive surface provided by an acrylic pressure-sensitive adhesive layer formed of the obtained specific acrylic polymerizable composition exerts excellent adhesion reliability to an adherend of concern for corrosion due to an acid component. Examples of the adherend of concern for corrosion due to an acid component include a transparent electrode typified by ITO, a metal adherend, an optical film having provided on the surface thereof a sputtered silver layer or copper mesh having an electromagnetic wave-absorbing function, and an earth electrode.

The monomer mixture of the specific acrylic polymerizable composition is prepared by mixing monomer (m1) to monomer (m3) and, if desired, monomer (m4) in predetermined amounts according to respective components by a known technique. Also, the partial polymerization product of the monomer mixture is prepared by partially polymerizing the monomer components. The preparation method for such a partial polymerisation product is not particularly limited, but, for example, in the case of a photopolymerization method, the prepared monomer mixture is mixed with a photopolymerization initiator, and the monomer mixture is irradiated with an active energy ray (for example, irradiation with an ultraviolet ray) to cause photopolymerization, thereby polymerizing a part of the monomer components.

Also, as described above, the specific pressure-sensitive adhesive layer is formed of a cured product obtained by curing the polymerizable composition, but the curing method therefor is not particularly limited, and a conventionally known or commonly employed polymerization method is used. Particularly, in the present invention, from the standpoint of workability, thick coatability (easiness to form a thick coated layer, easiness to obtain a thick type), little environmental load and the like, a heat- or active energy ray-induced curing reaction using a polymerization initiator such as thermal polymerization initiator or photopolymerization initiator is preferably utilized, and it is more preferred to utilize an active energy ray-induced curing reaction using a photopolymerization initiator. In this case, the polymerization initiator may be used alone, may be used in combination of two or more thereof.

The photopolymerization initiator is not particularly limited, and usable examples thereof include a benzoin ether-based photopolymerization initiator, an acetophenone-based photopolymerization initiator, an $\alpha$-ketol-based photopolymerization initiator, an aromatic sulfonyl chloride-based photopolymerization initiator, a photoactive oxime-based photopolymerization initiator, a benzoin-based photopolymerization initiator, a benzyl-based photopolymerization initiator, a benzophenone-based photopolymerization initiator, a ketal-based photopolymerization initiator, a thioxanthone-based photopolymerization initiator, an $\alpha$-hydroxyketone-based photopolymerization initiator, an $\alpha$-aminoketone-based photopolymerization initiator, and an acylphosphine oxide-based photopolymerization initiator.

Specifically, examples of the ketal-based photopolymerization initiator include 2,2-dimethoxy-1,2-diphenylethan-1-one ("IRGACURE 651 ", trade name, produced by Ciba Japan), and benzyl dimethyl ketal. Examples of the $\alpha$-hydroxyketone-based photopolymerization initiator include 1-hydroxy-cyclohexyl-phenyl ketone ("IRGACURE 184", trade name, produced by Ciba Japan), 2-hydroxy-2-methyl-1-phenyl-propan-1-one ("DAROCUR 1173", trade name, produced by Ciba Japan), and 1-[4-(2-hydroxyethoxy)-phenyl]-2-hydroxy-2-methyl-1-propan-1-one ("IRGACURE 2959", trade name, produced by Ciba Japan). Examples of the $\alpha$-aminoketone-based photopolymerization initiator include 2-methyl-1[4-(methylthio)phenyl]-2-morpholinopropan-1-one ("IRGACURE 907", trade name, produced by Ciba Japan), and 2-benzyl-2-dimethylamino-1-(4-morpholinophenyl)-butanone-1 ("IRGACURE 369", trade name, produced by Ciba Japan). Examples of the acylphosphine oxide-based photopolymerization initiator include 2,4,6-trimethylbenzoyldiphenylphosphine oxide ("LUCIRIN TPO", trade name, produced by BASF). Examples of the benzoin ether-based photopolymerization initiator include benzoin methyl ether, benzoin ethyl ether, benzoin propyl ether, benzoin isopropyl ether, benzoin isobutyl ether, and anisole methyl ether. Examples of the acetophenone-based photopolymerization initiator include 2,2-diethoxyacetophenone, 2,2-dimethoxy-2-phenylacetophenone, 1-hydroxycyclohexyl phenyl ketone, 4-phenoxydichloro acetophenone, and 4-tert-butyl-dichloroacetophenone. Examples of the aromatic sulfonyl chloride-based photopolymerization initiator include 2-naphthalene sulfonyl chloride. Examples of the photoactive oxime-based photopolymerization initiator include 1-phenyl-1,1-propanedione-2-(o-ethoxycarbonyl)-oxime. Examples of the benzoin-based photopolymerization initiator include benzoin. Examples of the benzyl-based photopolymerization initiator include benzyl. Examples of the benzophenone-based photopolymerization initiator include benzophenone, benzoylbenzoic acid, 3,3'-dimethyl-4-methoxybenzophenone, polyvinyl benzophenone, and $\alpha$-hydroxycyclohexyl phenyl ketone. Examples of the thioxanthone-based photopolymerization initiator include thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone, and dodecylthioxanthone. Examples of the $\alpha$-ketol-based photopolymerization initiator include 2-methyl-2-hydroxypropiophenone and 1-[4-(2-hydroxyethyl)-phenyl]-2-hyydroxy-methylpropan-1-one.

Examples of the thermal polymerization initiator include an azo-based thermal polymerization initiator such as 2,2'-azobisisobutyronitrile, 2.2'-azobis-2-methylbutyronitrile, dimethyl 2,2'-azobis(2-methylpropionate), 4,4'-azobis-4-cyanovaleric acid, azobisisovaleronitrile, 2,2'-azobis(2-amidinopropane)dihydrochloride, 2,2'-azobis[2-(5-methyl-2-imidazolin-2-yl)propane]dihydrochloride, 2,2'-azobis(2-methylpropionamidine)disulfate and 2,2'-azobis(N,N'-dimethyleneisobutylamidine) dihydrochloride; a peroxide-based thermal polymerization initiator such as dibenzoyl peroxide and tert-butyl permaleate; and a redox-type thermal polymerization initiator. The amount of the thermal polymerization initiator used is not particularly limited and may be in the conventional range allowing for utilization as a thermal polymerization initiator.

In the present invention, in the case of using a photopolymerization method as the method for curing a polymerizable composition to form the specific pressure-sensitive adhesive layer, the amount of the photopolymerization initiator added in the polymerizable composition is not particularly limited as long as the specific pressure-sensitive adhesive layer is formed. For example, the amount of the photopolymerization initiator added in the specific acrylic polymerizable composition is not particularly limited, but if it is excessively added, this may incur reduction in the molecule weight of the acrylic polymer in the obtained acrylic pressure-sensitive adhesive layer, leading to deterioration of the adhesion characteristics of the obtained acrylic pressure-sensitive adhesive layer, whereas if the amount added is too small, since the polymerization rate is reduced, speeding up of the coating process may not be achieved. For these reasons, the content of the photopolymerization initiator in the specific acrylic polymerizable composition is preferably from 0.001 to 5 parts by weight, more preferably from 0.01 to 5 parts by weight, and still more preferably from 0.05 to 3 parts by weight, per 100 parts by weight of the monomer mixture contained in the specific acrylic polymerizable composition, or its partial polymerization product.

At the activation of the polymerization initiator, the specific acrylic polymerizable composition is irradiated with an active energy ray. Examples of such an active energy ray include ionizing radiation such as $\alpha$-ray, $\beta$-ray, $\gamma$-ray, neutron ray and electron ray, and an ultraviolet ray, and particularly, an ultraviolet ray is preferred. The irradiation energy, irradiation time and the like of the active energy ray are not particularly limited and may be sufficient if the photopolymerization initiator can be activated to cause a reaction of the monomer components.

Furthermore, in the present invention, from the standpoint of enhancing durability by formation of crosslinked structure or balancing repulsion resistance in the acrylic pressure-sensitive adhesive layer formed of the specific acrylic polymerizable composition, a crosslinking component (crosslinking agent) is preferably incorporated into the specific acrylic polymerizable composition.

As the crosslinking agent, a conventionally known crosslinking agent may be used, and preferably usable examples thereof include a polyisocyanate-based compound, an epoxy-based compound, an aziridine-based compound, a metal chelate-based compound, and a melamine-based compound. In addition, a polyfunctional (meth)acrylate is also preferably used. Among these, a polyisocyanate-based compound and a polyfunctional monomer are preferred. Incidentally, crosslinking may be used alone, or may be used in combination of two or more thereof.

Examples of the polyisocyanate-based compound include tolylene diisocyanate, hexamethylene diisocyanate,

polymethylene polyphenyl isocyanate, diphenylmethane diisocyanate, a dimer of diphenylmethane diisocyanate, a reaction product of trimethylolpropane and tolylene diisocyanate, a reaction product of trimethylolpropane and hexamethylene diisocyanate, polyether polyisocyanate, and polyester polyisocyanate.

The polyfunctional (meth)acrylate can be used without any particular limitation as long as it is a compound having at least two (meth)acryloyl groups, and examples thereof include trimethylolpropane tri(meth)acrylate, tetramethylolmethane tetraacrylate, pentaerythritol di(meth)acrylate, pentaerythritol tri(meth)acrylate, pentaerythritol tetra(meth) acrylate, 1,2-ethylene glycol di(meth)acrylate, 1,4-butylene glycol di(meth)acrylate, 1,6-hexanediol di(meth)acrylate, 1,12-dodecanediol di(meth)acrylate, dipentaerythritol monohydroxy penta(meth)acrylate, dipentaerythrital hexa(meth) acrylate, polyethylene glycol di(meth)acrylate, hexanediol di(meth)acrylate, (poly)ethylene glycol di(meth)acrylates, (poly)propylene glycol di(meth)acrylates, neopentyl glycol di(meth)acrylate, tetramethylolmethane tri(meth)acrylate, allyl (meth)acrylate, vinyl (meth)acrylate, epoxy (meth)crylate, polyester (meth)acrylate, urethane (meth)acrylate, and a reactive hyperbranched polymer having a plurality of (meth)acryloyl groups at the terminal [for example, "CN2300", "CN2301 and "CN2320", trade names, produced by SARTOMER Company, Inc.].

The amount of the crosslinking agent added in the specific acrylic polymerizable composition is not particularly limited, but, for example, in view of adhesion reliability, the amount added is preferably from 0.001 to 5 parts by weight, more preferably from 0.002 to 4 parts by weight, and still more preferably from 0.002 to 3 parts by weight, per 100 parts by weight of the monomer mixture contained in the specific acrylic polymerizable composition, or its partial polymerization product. If the amount added is less than 0.001 parts by weight, the cohesive force of the pressure-sensitive adhesive layer may be reduced, whereas if the amount added exceeds 5 parts by weight, flexibility or tack of the pressure-sensitive adhesive layer may be impaired.

In the present invention, the polymerizable composition forming the pressure-sensitive adhesive layer, such as the specific acrylic polymerizable composition, may contain other additives as long as curing of the present invention is not impaired. Examples of other additives include a tackifier such as rosin derivative resin, polyterpene resin, petroleum resin and oil-soluble phenolic resin; a plasticizer; a filler; an anti-aging agent; and a surfactant. In addition, a crosslinking accelerator may be used.

In the present invention, the gel fraction of the specific pressure-sensitive adhesive layer is not particularly limited as long as the resistance ratio determined by the corrosion resistance test is from 90 to 120 and the average air bubble diameter of air bubbles determined by the bubbling delamination resistance test is 1.0 mm or less. For example, as for the gel fraction of the acrylic pressure-sensitive adhesive layer formed of the specific acrylic polymerizable composition, from the standpoint of satisfying both repulsion resistance and pressure-sensitive adhesive property, the gel fraction (that is, solvent-insoluble fraction) is preferably from 20 to 90 wt%, more preferably from 25 to 85 wt%, and still more preferably from 30 to 70 wt%. The gel fraction of the acrylic pressure-sensitive adhesive layer formed of the specific acrylic polymerizable composition can be adjusted by selecting the kind or amount of the crosslinking agent added to the specific acrylic polymerizable composition.

The gel fraction is determined as follows. First, a porous polytetrafluoroethylene film ("NTF-1122", trade name, produced by Nitto Denko Corporation, thickness: 85 μm) is cut out into a size of 100 mm x 100 mm, a kite string (thickness: 1.5 mm) is also cut into a length of about 100 mm, and their weight is measured (the weight of the porous polytetrafluoroethylene film and the kite string is designated as "weight (A)"). Next, a predetermined amount (about 1 g) of the pressure-sensitive adhesive layer is wrapped in the porous polytetrafluoroethylene film, and the opening is tied with the kite string to produce a pack having packed therein the pressure-sensitive adhesive layer (sometimes referred to as "pressure-sensitive adhesive layer-containing pack"). The weight of this pressure-sensitive adhesive layer-containing pack is measured, and the weight of the pressure-sensitive adhesive layer is determined by subtracting the weight (A) of the porous polytetrafluoroethylene film and the kite string from the weight of the pressure-sensitive adhesive layer-containing pack. This weight of the pressure-sensitive adhesive layer is designated as weight (B). Thereafter, the pressure-sensitive adhesive layer-containing pack is immersed in 50 mL of ethyl acetate for 7 days under the temperature condition of 23°C to elute only the sol component in the pressure-sensitive adhesive layer out of the porous polytetrafluoroethylene film, and after the immersion, the pressure-sensitive adhesive layer-containing pack immersed in ethyl acetate for 7 days is taken out. Ethyl acetate attached to the porous polytetrafluoroethylene film is wiped off, and the pack is dried in a drier at 130°C for 2 hours. After the drying, the weight of the pressure-sensitive adhesive layer-containing pack is measured, and this weight of the pressure-sensitive adhesive layer-containing pack is designated as weight (C).
Then, the gel fraction (wt%) of the pressure-sensitive adhesive layer is determined according to the following formula:

$$\text{Gel fraction (wt\%)} = [(C-A)/B] \times 100$$

The thickness of the double-coated pressure-sensitive adhesive sheet for optical use of the present invention is not particularly limited, but in view of convenience of production, the thickness is preferably from 10 to 500 μm, and

more preferably from 15 to 300 μm. Also, the thickness of the pressure-sensitive adhesive layer in the double-coated pressure-sensitive adhesive sheet for optical use of the present invention is preferably from 5 to 450 μm, and more preferably from 7 to 270 μm. In this connection, in the case where the pressure-sensitive adhesive surface of the double-coated pressure-sensitive adhesive sheet for optical use of the present invention is protected by the following release film, the thickness of the release film is not included.

(Release Film)

The pressure-sensitive adhesive surface of the double-coated pressure-sensitive adhesive sheet for optical use of the present invention may be protected by a release film until use. For example, the pressure-sensitive adhesive surfaces of the double-coated pressure-sensitive adhesive sheet for optical use of the present invention may be protected by two release films, respectively, or may be protected by one release film of which both sides are a release surface, in a form of being wound into a roll. The release film is used as a protective member and removed when attaching the sheet to an adherend. Incidentally, the release film which is removed at the time of using (attaching) the double-coated pressure-sensitive adhesive sheet for optical use of the present invention is not included in the "substrate," described below.

The release liner (release film) may be a commonly employed release paper or the like and is not particularly limited, but, usable examples include a base material having a release-treated layer, a low adhesive base material composed of a fluorine-based polymer, and a low adhesive base material composed of a non-polar polymer. Examples of the base material having a release-treated layer include plastic film and paper, which are surface-treated with a release treating agent such as silicone type, long chain alkyl type, fluorine type and molybdenum sulfide. Examples of the fluorine-based polymer for the low adhesive base material composed of a fluorine-based polymer include polytetrafluoroethylene, polychlorotrifluoroethylene, polyvinyl fluoride, polyvinylidene fluoride, a tetrafluoroethylene-hexafluoropropylene copolymer, and a chlorofluoroethylene-vinylidene fluoride copolymer. Examples of the non-polar polymer for the low adhesive base material composed of a non-polar polymer include an olefin-based resin (e.g., polyethylene, polypropylene). Incidentally, the release liner can be formed by a conventionally known or commonly employed method. The thickness and the like of the release liner are also not particularly limited.

(Other Layers)

The double-coated pressure-sensitive adhesive sheet for optical use of the present invention may have other layers (for example, an intermediate layer and a primer layer) as long as the effects of the present invention are no impaired. More specifically, examples thereof include a release agent coating layer for imparting releasability, a primer coating layer for enhancing adherence force, a layer for imparting good deformability, a layer for increasing the contact area with an adherend, a layer for improving adhesive force to an adherend, a layer for achieving good followability to the surface profile of an adherend, a layer for enhancing the processability in terms of reduction in the adhesive force by heating, and a layer for improving the releasability after heating.

(Substrate)

The double-coated pressure-sensitive adhesive sheet for optical use of the present invention may have a substrate as a supporting base or may be a substrate-less type. In the case where the double-coated pressure-sensitive adhesive sheet for optical use of the present invention is a substrate-attached type, the substrate is not particularly limited, but examples thereof include various optical films (various optical functional layers) such as plastic film, anti-reflection (AR) film, polarizing plate and retardation plate. Examples of the material for the plastic film and the like include a plastic material such as a polyester-based resin such as polyethylene terephthalate (PET), an acrylic resin such as polymethyl methacrylate (PMMA), a polycarbonate, a triacetyl cellulose, a polysulfone, a polyarylate, and a cyclic olefin-based polymer such as "ARTON (trade name, cyclic olefin-based polymer, produced by JSR Corporation)" and "ZEONOR (trade name, cyclic olefin-based polymer, produced by Zeon Corporation)". Incidentally, the plastic material may be used alone, or may be used in combination of two or more thereof. The "substrate" above is a portion attached together to an adherend in using (attaching) the double-coated pressure-sensitive adhesive sheet for optical use of the present invention to the adherend (for example, an optical member or an optical functional layer). The release film which is removed when using (attaching) the double-coated pressure-sensitive adhesive sheet for optical use of the present invention is not included in the "substrate".

Above all, the substrate is preferably a transparent substrate. This "transparent substrate" indicates a substrate, for example, having a total light transmittance of preferably 85% or more, and more preferably 90% or more, in the visible wavelength region (in accordance with JIS K 7361). Examples of the transparent substrate include a PET film and a non-oriented film such as "ARTON" (trade name) and "ZEONOR" (trade name).

The thickness of the substrate is not particularly limited and is, for example, preferably from 25 to 1,500 μm, more preferably from 30 to 1,300 μm. The substrate may have either a single-layer configuration or a multilayer configuration. Also, the substrate surface may be appropriately subjected to a conventionally known or commonly employed surface treatment including a physical treatment such as corona discharge treatment and plasma treatment, and a chemical treatment such as primer treatment.

(Production Method of Double-coated Pressure-Sensitive Adhesive Sheet for Optical Use)

The double-coated pressure-sensitive adhesive sheet for optical use of the present invention can be formed by a conventionally known or commonly employed method. More specifically, the method includes, for example, a method of preparing a polymerizable composition for forming the specific pressure-sensitive adhesive layer, coating the polymerizable composition on an appropriate support (for example, the above-described substrate or release film) to form a coated layer, and finally polymerizing and curing the coated layer.

The coating method used at the time of coating the polymerizable composition is not particularly limited, and a normal method may be employed. Examples of such a coating method include a slot die method, a reverse gravure coating method, a microgravure method, a dipping method, a spin coating method, a brush coating method, a roll coating method, and a flexographic printing method. As for the coating tool used at the coating, generally employed coating tools can be used without any particular limitation. Examples of such a coating tool include a roll coater such as reverse coater and gravure coater; a curtain coater; a lip coater; a die coater; and a knife coater.

As for the method to cure the polymerizable composition, conventionally known various polymerization methods can be used. For example, a photopolymerization method using an active energy ray, or a thermal polymerization method may be employed.

The acrylic pressure-sensitive adhesive sheet for optical use, having a specific acrylic pressure-sensitive adhesive layer formed of the above-described specific acrylic polymerizable composition can be obtained, for example, by coating the specific acrylic polymerizable composition having previously added thereto a photopolymerization initiator, on an appropriate support such as release film or substrate to form a coated layer and after attaching a release film on the coated layer, irradiating the coated layer with an active energy ray such as ultraviolet ray, thereby curing the specific acrylic polymerizable composition.

(Double-coated Pressure-Sensitive Adhesive Sheet for Optical Use)

The double-coated pressure-sensitive adhesive sheet for optical use of the present invention comprises at least the specific pressure-sensitive adhesive layer. The structure of the double-coated pressure-sensitive adhesive sheet for optical use of the present invention is not particularly limited as long as it has a configuration that the specific pressure-sensitive adhesive layer provides at least one pressure-sensitive adhesive surface.

Furthermore, the double-coated pressure-sensitive adhesive sheet for optical use of the present invention may be made up in the form of being wound into a roll or in the form of the sheets being laminated. That is, the double-coated pressure-sensitive adhesive sheet for optical use of the present invention may have a sheet form, a tape form, or the like. The double-coated pressure-sensitive Adhesive sheet for optical use in the state or form of being wound into a roll may have a roll-wound state or form with pressure-sensitive adhesive surfaces being protected by two release films, respectively, or may have a roll-wound state or form with pressure-sensitive adhesive surfaces being protected by one release film (of a type where both sides thereof are release-treated).

The double-coated pressure-sensitive adhesive sheet for optical use of the present invention exerts good corrosion resistance and high adhesion reliability on the pressure-sensitive adhesive surface provided by the specific pressure-sensitive adhesive layer.

In the pressure-sensitive adhesive surface provided by the specific pressure-sensitive adhesive layer of the double-coated pressure-sensitive adhesive sheet for optical use of the present invention, the average air bubble diameter of air bubbles determined by the bubbling delamination resistance test is 1.0 mm or less. Therefore, adhesion reliability to an adherend [for example, a resin sheet and various optical members (optical functional layers)] is excellent.

The double-coated pressure-sensitive adhesive sheet for optical use of the present invention exerts good adhesion reliability on the pressure-sensitive adhesive surface provided by the specific pressure-sensitive adhesive layer, because it is excellent in adhesiveness to an adherend and furthermore, excellent in "bubbling delamination resistance" and "repulsion resistance". Incidentally, the "bubbling delamination resistance" indicates that after attachment to an adherend, even when an air bubble is generated from the adherend due to change with aging or under harsh conditions such as high-temperature condition, an adhesion reliability failure such as "lifting" or "delamination" does not occur at the adhesion interface. Also, the "repulsion resistance" indicates that after attachment to a curved adherend, an adhesion reliability failure such as "lifting" or "delamination" due to change with aging or under harsh conditions such as high-temperature condition does not occur at the adhesion interface. In this connection, "bubbling delamination

resistance" and "repulsion resistance" are collectively referred to as "adhesion reliability".

Also, in the pressure-sensitive adhesive surface provided by the specific pressure-sensitive adhesive layer of the double-coated pressure-sensitive adhesive sheet for optical use of the present invention, the resistance ratio determined by the corrosion resistance test is from 90 to 120. Therefore, high corrosion resistance on an adherend (particularly, various optical members (optical functional layers) and the like) is provided.

Furthermore, in the double-coated pressure-sensitive adhesive sheet for optical use of the present invention, the total light transmittance is not particularly limited but is preferably 90% or more, and more preferably 92% or more. When the double-coated pressure-sensitive adhesive sheet for optical use of the present invention has such a total light transmittance, excellent visibility and high transparency, as well as excellent optical characteristics are exerted. If the total light transmittance of the double-coated pressure-sensitive adhesive sheet for optical use of the present invention is less than 90%, this may adversely affect the transparency or appearance of an optical member (optical functional layer) in which the pressure-sensitive adhesive sheet is used.

The total light transmittance can be measured, for example, by using a haze meter ("HM-150", trade name, manufactured by Murakami Color Research Laboratory Co., Ltd.) after attaching the double-coated pressure-sensitive adhesive sheet for optical use of the present invention to a slide glass (in accordance with JIS K 7361).

Also, in the double-coated pressure-sensitive adhesive sheet for optical use of the present invention, the haze is not particularly limited but is preferably 1.5% or less, and more preferably 1.0% or less. When the double-coated pressure-sensitive adhesive sheet for optical use of the present invention has such a haze, excellent visibility and high transparency, as well as excellent optical characteristics are exerted. If the haze of the double-coated pressure-sensitive adhesive sheet for optical use of the present invention exceeds 1.5%, this may adversely affect the transparency or appearance of an optical member (optical functional layer) in which the pressure-sensitive adhesive sheet is used.

The haze can be measured, for example, by using a haze meter ("HM-150", trade name, manufactured by Murakami Color Research Laboratory Co., Ltd.) after attaching the double-coated pressure-sensitive adhesive sheet for optical use of the present invention to a slide glass (in accordance with JIS K 7361).

Accordingly, the double-coated pressure-sensitive adhesive sheet for optical use of the present invention can be suitably used for optical applications, for example, an application in laminating together various optical members (various optical functional layers) or an application in fixing various optical members (various optical functional layers) to a predetermined site. For example, the double-coated pressure-sensitive adhesive sheet does not cause an increase in a resistance value of a metal thin film (including a metal oxide thin film) such as ITO (corrosion of a metal thin film) and can be suitably used also for an application where the ITO film is laminated.

The optical member (optical functional layer) above indicates a member or layer having optical characteristics (such as polarization, light refraction, light scattering, light refection, light transmission, light absorption, light diffraction, optical rotation, or visibility).

The optical member is not particularly limited as long as it is a member having optical characteristics, but examples thereof include a member constituting a device such as display device (image display device) and input device, and a member used in these devices, and examples thereof include polarizing plate, wavelength plate, retardation plate, optical compensation film, brightness enhancing film, light guide plate, reflection film, anti-reflection film, transparent electrically conductive film (e.g., ITO film), design film, decorative film, surface protective film, prism, color filter, transparent substrate, and transparent resin plate, and a laminated member thereof. Incidentally, each of the "plate" and the "film" includes a form such as plate, film and sheet. For example, the "polarizing plate" includes "polarizing film" and "polarizing sheet".

Particularly, the double-coated pressure-sensitive adhesive sheet for optical use of the present invention is useful, for example, for an application in attaching a transparent electrically conductive film (e.g., ITO film), or an application in attaching an optical functional film having provided on the surface thereof a sputtered silver layer or copper mesh and having an electromagnetic wave-absorbing function.

Examples of the display device include liquid crystal display device, an organic EL (electroluminescence) display device, PDP (plasma display panel), and electronic paper. Examples of the input device include a touch panel.

Among others, the double-coated pressure-sensitive adhesive sheet for optical use of the present invention is preferably used for an application in attaching a member constituting a touch panel, or a member used in a touch panel (for touch panel member attachment). More specifically, the double-coated pressure-sensitive adhesive sheet is preferably used in attaching, for example, a member to protect or decorate a touch panel, such as surface protective film, design film and decorative film of a touch panel. Also, the double-coated pressure-sensitive adhesive sheet is preferably used for an application in attaching a touch pane! itself to a display device (for example, a liquid crystal display device).

The optical member (for example, a touch panel member) is not particularly limited, but example thereof include a member (such as sheet-like, film-like or plate-like member) composed of acrylic resin, polycarbonate, polyethylene terephtalate, glass or metal thin film. In this connection, the "optical member" as used in the present invention includes a member (such as design film, decorative film and surface protective film) fulfilling the role of decoration or protection while maintaining visibility of a display device or an input device which are an adherend.

The embodiment of attaching an optical member by means of the double-coated pressure-sensitive adhesive sheet for optical use of the present invention is not particularly limited and may be, for example, (1) an embodiment where optical members are attached with each other through the double-coated pressure-sensitive adhesive sheet for optical use of the present invention, (2) an embodiment where an optical member is attached to a member other than an optical member through the double-coated pressure-sensitive adhesive sheet for optical use of the present invention, or (3) an embodiment where the double-coated pressure-sensitive adhesive sheet for optical use of the present invention provided on an optical member is attached to an optical member or a member other than an optical member. In the case of attaching the double-coated pressure-sensitive adhesive sheet for optical use of the present invention to an optical member, it is important to attach the pressure-sensitive adhesive surface provided by the specific pressure-sensitive adhesive layer to the optical member.

By attaching the double-coated pressure-sensitive adhesive sheet for optical use of the present invention to an optical member, there can be obtained a laminate configuration of the optical member and the double-coated pressure-sensitive adhesive sheet for optical use in the form where the optical member is contacting with the double-coated pressure-sensitive adhesive sheet for optical use. All of the above embodiments (1) to (3) contain this laminate configuration.

Also, such a laminate configuration can be used, for example, as a pressure-sensitive adhesive-attached optical member.

Specific examples of the member containing such a laminate configuration include a "capacitance-type touch panel" shown in Fig. 2 and Fig. 3, and a "resistive touch panel" shown in Fig. 4.

Fig. 2 and Fig. 3 each illustrates one example (schematic cross-sectional view) of a capacitance-type touch panel fabricated by laminating together members with use of the double-coated pressure-sensitive adhesive sheet for optical use of the present invention. In the touch panel shown in Fig. 2, a resin plate 21 (for example, a reinforcing plate such as polycarbonate plate or acrylic plate) is attached to glass 24 having provided on the surface thereof a transparent electrically conductive film 23 (electrically conductive layer) of ITO, through the double-coated pressure-sensitive adhesive sheet for optical use 22 (pressure-sensitive adhesive sheet 22) of the present invention. Also, an image display panel 25 is attached to the glass plate surface opposite the ITO film-formed surface, through the double-coated pressure-sensitive adhesive sheet for optical use 22 (pressure-sensitive adhesive sheet 22) of the present invention. The touch panel shown in Fig. 3 has a constitution where glass 24 in Fig. 2 is replaced by a PET film 26.

Furthermore, the double-coated pressure-sensitive adhesive sheet for optical use of the present invention can be used in a capacitance-type touch panel, for example, when attaching a polymethyl methacrylate (PMMA) plate on the surface of a transparent electrically conductive PET film on which a silver paste electrode (height: from 8 to 10 μm) is provided.

Fig. 4 illustrates one example (schematic cross-sectional view) of a resistive touch panel fabricated by laminating together members with use of the double-coated pressure-sensitive adhesive sheet for optical use of the present invention. In the touch panel shown in Fig. 4, two transparent electrically conductive polyethylene terephthalate (PET) films 43 each having formed on the surface thereof a transparent electrically conductive film (electrically conductive layer) of Indium Tin Oxide (ITO) are disposed to interpose an electrically conducting layer 44 therebetween by arranging the electrically conductive layer-formed surfaces to face each other (face-to-face arrangement). Also, a PET film 41 (PET film subjected to design printing) is attached to one outside of the face-to-face arranged transparent electrically conductive PET films 43 through the double-coated pressure-sensitive adhesive sheet for optical use 42 (pressure-sensitive adhesive sheet 42) of the present invention. Furthermore, a resin plate 45 (for example, a reinforcing plate such as polycarbonate plate or acrylic plate) is attached to the other outside of the face-to-face arranged transparent electrically conductive PET films 43 through the double-coated pressure-sensitive adhesive sheet for optical use 42 (pressure-sensitive adhesive sheet 42) of the present invention.

## EXAMPLES

The present invention is described below by referring to Examples, but the present invention is not limited to these Examples by any means.

(Use Example 1 of Release Film)

As the release film, a polyester film ("MRF38", trade name, produced by Mitsubishi Plastics Industries, Ltd.) of which one surface was release-treated with a silicone-based release agent was used (hereinafter, sometimes referred to as release film (A)).

(Use Example 2 of Release Film)

As the release film, a polyester film ("MRN38", trade name, produced by Mitsubishi Plastics Industries, Ltd.) of which one surface was release-treated with a silicone-based release agent was used (hereinafter, sometimes referred to as release film (B)).

(Example 1)

To 100 parts by weight of a mixture consisting of 70.5 parts by weight of 2-ethylhexyl acrylate, 26 parts by weight of N-vinyl-2-pyrrolidone and 3.5 parts by weight of N-hydroxyetthylacrylamide were blended 0.05 parts by weight of 2,2-dimethoxy-1,2-diphenylethan-1-one ("IRGACURE 651 ", trade name, produced by Ciba Japan) and 0.05 parts by weight of 1-hydroxy-cyclohexyl-phenyl ketone ("IRGACURE 184", trade name, produced by Ciba Japan), as photopolymerization initiators, and after sufficient purging with nitrogen gas, the mixture was exposed to an ultraviolet ray in a nitrogen atmosphere and photopolymerized, to thereby obtain a partial polymerization product (syrup, syrup-like composition) having a polymerization conversion of about 12 wt%.

To 100 parts by weight of the partial polymerization product above was added 0.015 parts by weight of 1,6-hexanediol diacrylate as a crosslinking agent, and the obtained composition was coated on the release-treated surface of release film (A) to have a final thickness of 150 μm after curing, whereby a coating layer was formed.
Thereafter, release film (B) was attached on the coating layer in the form of the release-treated surface being contacted with the coating layer, and the resulting laminate was irradiated with an ultraviolet ray under the conditions of an illuminance of 5 $mW/cm^2$ and a light quantity of 720 $mJ/cm^2$, to obtain a pressure-sensitive adhesive sheet [release film (A)/pressure-sensitive adhesive layer/release film (B)].
The gel fraction of the pressure-sensitive adhesive layer was 65 wt%.

(Example 2)

A partial polymerization product (syrup, syrup-like composition) having a polymerization conversion of about 12 wt% was obtained in the same manner as in Example 1 except that a monomer mixture consisting of 86 parts by weight of 2-ethylhexyl acrylate, 12.5 parts by weight of N-vinyl-2-pyrrolidone and 1.5 parts by weight of N-hydroxyethylacxylamide was used as the monomer mixture.

Subsequently, using the partial polymerization product above, a pressure-sensitive adhesive sheet [release film (A)/pressure-sensitive adhesive layer/release film (B)] was obtained in the same manner as in Example 1 except that 0.25 parts by weight of a reaction product of trimethylolpropane and tolylene diisocyanate ("CORONATE L", trade name, produced by Nippon Polyurethane Industry Co., Ltd., solid content: 75 wt%) was added as a crosslinking agent.
The gel fraction of the pressure-sensitive adhesive layer was 61 wt%.

(Example 3)

A partial polymerization product (syrup, syrup-like composition) having a polymerization conversion of about 12 wt% was obtained in the same manner as in Example 1 except that a monomer mixture consisting of 70 parts by weight of 2-ethylhexyl acrylate, 12 parts by weight of N,N-diethylacrylamide, 15 parts by weight of N-vinyl-2-pyrrolidone, 1.5 parts by weight of N-hydroxyethylacrylamide and 1.5 parts by weight of N-hydroxymethylacrylamide was used as the monomer mixture.

Subsequently, using the partial polymerization product above, a pressure-sensitive adhesive sheet [release film (A)/pressure-sensitive adhesive layer/release film (B)] was obtained in the same manner as in Example 1 except that 0.25 parts by weight of a reaction product of trimethylolpropane and tolylene diisocyanate ("CORONATE L", trade name, produced by Nippon Polyurethane Industry Co., Ltd., solid content: 75 wt%) was added as a crosslinking agent.
The gel fraction of the pressure-sensitive adhesive layer was 62 wt%.

(Comparative Example 1)

A partial polymerization product (syrup, syrup-like composition) having a polymerization conversion of about 9 wt% was obtained in the same manner as in Example 1 except that a monomer mixture consisting of 91 parts by weight of 2-ethylhexyl acrylate and 9 parts by weight of acrylic acid was used as the monomer mixture.

Subsequently, using the partial polymerization product above, a pressure-sensitive adhesive sheet [release film (A)/pressure-sensitive adhesive layer/release film (B)] was obtained in the same manner as in Example 1 except that 0.05 parts by weight of 1,6-hexanediol diacrylate was added as a crosslinking agent.
The gel fraction of the pressure-sensitive adhesive layer was 72 wt%.

(Comparative Example 2)

A partial polymerization product (syrup, syrup-like composition) having a polymerization conversion of about 14 wt% was obtained in the same manner as in Example 1 except that 100 parts by weight of 2-ethylhexyl acrylate was used in place of 100 parts by weight of the monomer mixture.
Subsequently, using the partial polymerization product above, a pressure-sensitive adhesive sheet [release film (A)/pressure-sensitive adhesive layer/release film (B)] was obtained in the same manner as in Example 1 except that 0.15 parts by weight of 1,6-hexanediol diacrylate was added as a crosslinking agent.
The gel fraction of the pressure-sensitive adhesive layer was 82 wt%.

(Comparative Example 3)

A partial polymerization product (syrup, syrup-like composition) having a polymerization conversion of about 12 wt% was obtained in the same manner as in Example 1 except that a monomer mixture consisting of 84 parts by weight of 2-ethylhexyl acrylate and 16 parts by weight of N-vinyl-2-pyrrolidone was used as the monomer mixture.
Subsequently, using the partial polymerization product above, a pressure-sensitive adhesive sheet [release film (A)/pressure-sensitive adhesive layer/release film (B)] was obtained in the same manner as in Example 1 except that 0.06 parts by weight of 1,6-hexanediol diacrylate was added as a crosslinking agent.
The gel fraction of the pressure-sensitive adhesive layer was 65 wt%.

(Comparative Example 4)

A partial polymerization product (syrup, syrup-like composition) having a polymerization conversion of about 11 wt% was obtained in the same manner as in Example 1 except that a monomer mixture consisting of 95 parts by weight of 2-ethylhexyl acrylate and 5 parts by weight of N-hydraxyethylacrylamide was used as the monomer mixture.
Subsequently, using the partial polymerization product above, a pressure-sensitive adhesive sheet [release film (A)/pressure-sensitive adhesive layer/release film (B)] was obtained in the same manner as in Example 1 except that 0.08 parts by weight of 1,6-hexanediol diacrylate was added as a crosslinking agent.
The gel fraction of the pressure-sensitive adhesive layer was 43 wt%.

(Evaluation)

With respect to the pressure-sensitive adhesive sheets of Examples and Comparative Examples, gel fraction, corrosion resistance test, transparency (optical characteristics), bubbling delamination resistance test, and repulsion resistance were measured or tested. The results are shown in Table 1.

(Measuring Method of Gel Fraction)

A porous polytetrafluoroethylene film ("NTF- 122", trade name, produced by Nitto Denko Corporation, thickness: 85 μm) was cut out into a size of 100 mm x 100 mm, a kite string (thickness: 1.5 mm) was also cut into a length of about 100 mm, and their weight was measured (the weight of the porous polytetrafluoroethylene film and the kite string is designated as "weight (A)").
After removing both release films from the sheet of each of Examples and Comparative Examples cut out into a size of 7 $cm^2$, the pressure-sensitive adhesive layer was wrapped in the porous polytetrafluoroethylene film, and the opening was tied with the kite string to produce a pack having packed therein the pressure-sensitive adhesive layer (pressure-sensitive adhesive layer-containing pack). The weight of this pressure-sensitive adhesive layer-containing pack was measured, and the weight of the sample was determined by subtracting the weight (A) of the porous polytetrafluoroethylene film and the kite string from the weight of the pressure-sensitive adhesive layer-containing pack. The weight of the sample was designated as weight (B).
Thereafter, the pressure-sensitive adhesive layer-containing pack was immersed in 50 mL of ethyl acetate for 7 days under the temperature condition of 23°C to elute only the sol component in the pressure-sensitive adhesive layer out of the porous polytetrafluoroethylene film, and after the immersion, the pressure-sensitive adhesive layer-containing pack immersed in ethyl acetate for 7 days was taken out. Ethyl acetate attached to the porous polytetrafluoroethylene film was wiped off, and the pack was dried in a drier at 130°C for 2 hours. After the drying, the weight of the pressure-sensitive adhesive layer-containing pack was measured, and this weight of the pressure-sensitive adhesive layer-containing pack was designated as weight (C).
Then, the gel fraction (wt%) of the pressure-sensitive adhesive layer was determined according to the following formula:

$$\text{Gel fraction (wt\%)} = [(C-A)/B] \times 100$$

(Corrosion Resistance Test)

A film having formed on the surface thereof an ITO layer (electrically conductive film, "ELECRYSTA", trade name, produced by Nitto Denko Corporation) was cut into a width of 25 mm and a length of 70 mm. This film corresponds to the electrically conductive film 11 of Fig. 1.
A silver paste ("DOTITE", trade name, produced by Fujikura Kasei Co., Ltd.) was coated in 15 mm at longitudinal both ends of the electrically conductive film above and dried by heating to form silver layers (silver electrode parts). The silver layer corresponds to the silver layer 12 of Fig. 1.
Thereafter, with respect to each of the pressure-sensitive adhesive sheets of Examples and Comparative Examples, one release film was removed and attached the exposed pressure-sensitive adhesive surface to a non-release-treated polyethylene terephthalate film (thickness: 50 μm), and then, the laminate was cut into a strip having a width of 20 mm and a length of 50 mm to obtain a test piece (configuration of test piece/release film). This test piece corresponds to the test piece 13 of Fig. 1.
Next, the other release film was removed, and the exposed pressure-sensitive adhesive surface of the test peace was attached by means of a hand roller by arranging the pressure-sensitive adhesive surface to contact with both silver layers, whereby a measurement sample was obtained (see, Fig. 1). Incidentally, the measurement sample consists of, as shown in Fig. 1, an electrically conductive film 11, a silver layer 12 and a test piece 13.
In the obtained measurement sample, the resistance value between two silver layers 12 was measured by a tester 14, and the obtained value was designated as the "initial resistance value".
Subsequently, the measurement sample was placed in an environment of a temperature of 60°C and a humidity of 95% and left standing still for 2 weeks. After standing still, the resistance value between two silver layers 12 of the measurement sample was measured by the tester 14, and the obtained value was designated as the "resistance value after standing still for 2 weeks in an environment of a temperature of 60°C and 95% RH".
The converted value of the "resistance value after standing still for 2 weeks in an environment of a temperature of 60°C and 95% RH" which was converted assuming that the "initial resistance value" is 100, was taken as the resistance ratio.
At the same time, a specimen where a pressure-sensitive adhesive sheet was not attached was measured as a blank sample.

(Evaluation Method of Transparency)

With respect to each of the pressure-sensitive adhesive sheets of Examples and Comparative Examples, one release film was removed and attached the exposed pressure-sensitive adhesive surface to 1 mm-thick glass (Matsunami; MICROSLIDE GLASS, white ground edges), and the other release film was removed to obtain a test piece.
Total light transmittance and haze of the test piece were measured by means of a haze meter ("HM-150", device name, manufactured by Murakami Color Research Laboratory Co., Ltd.), whereby transparency (optical characteristics) was evaluated.

(Bubbling Delamination Resistance Test)

With respect to each of the pressure-sensitive adhesive sheets of Examples and Comparative Examples, one release film was removed and attached the exposed pressure-sensitive adhesive surface to a non-release-treated polyethylene terephthalate film (thickness: 50 μm), and the sheet was cut into a size of 50 mm x 50 mm to obtain a test piece (polyethylene terephthalate film/pressure-sensitive adhesive layer/release film).
Subsequently, the release film of the test piece was removed, and attached to an acrylic plate ("ACRYLITE MR200", trade name, produced by Mitsubishi Rayon Co., Ltd., scratch resistance-treated type (hardcoat-treated type), thickness: 1.5 mm) by pressure-bonding under a pressure of 0.20 MPa by means of a laminator to obtain a construct (polyethylene terephthalate film/pressure-sensitive adhesive layer/acrylic plate). This construct is a construct where the acrylic plate having been subjected to a scratch treatment and the polyethylene terephthalate film having a thickness of 50 μm are joined together through the pressure-sensitive adhesive sheet, and in the construct, the scratch resistance-treated surface of the acrylic plate and the pressure-sensitive adhesive surface of the pressure-sensitive adhesive are put into contact with each other.
The construct above was left standing still for 1 day in an environment of 50°C, thereby being fully joined, and further left standing still for 4 days in an environment of 80°C, and the air bubble diameters of respective air bubbles produced in the pressure-sensitive adhesive layer surface on the side contacting with the acrylic plate were determined and

averaged to calculate the average air bubble diameter.
When an air bubble was not observed at all, the average air bubble diameter was rated as 0. Also, in the case of an elliptical air bubble, the long diameter was taken as the air bubble diameter.
The presence or absence of "delamination" or "lifting" from the acrylic plate was also observed.

(Evaluation Method of Repulsion Resistance)

Each of the pressure-sensitive adhesive sheets produced in Examples and Comparative Examples was cut into a strip having a width of 10 mm and a length of 90 mm and one release film (release film (B)) was removed and the exposed pressure-sensitive adhesive surface was attached to an aluminum plate with the same size (width: 10 mm, length of 90 mm, strip shape, thickness: 0.5 mm). This laminate was then bent with a curvature of R50 by arranging the pressure-sensitive adhesive sheet outside, and the other release film (release film (A)) was removed to expose the pressure-sensitive adhesive surface and pressure-bonded to a clean acrylic plate by using a laminator without causing a lifting.
Incidentally, the clean acrylic plate can be obtained by rubbing the surface back and forth 10 times (rub-cleaning) with an isopropyl alcohol-impregnated clean waste.
Thereafter, the laminate obtained above was left standing at room temperature (approximately from 20 to 25°C) for 24 hours, and the presence or absence of occurrence of a lifting from the acrylic plate was observed at longitudinal both ends of the sheet. When lifting was generated, the lifting distance was determined.
In this connection, the "lifting distance" is a distance from the acrylic plate at the end part of the pressure-sensitive adhesive sheet, and when lifting was generated at both end parts, the lager distance was taken as the lifting distance in the pressure-sensitive adhesive sheet.

Evaluation Criteria:

Good (A): When lifting was not observed and the lifting distance was less than 1.0 mm.
Bad (B): When the lifting distance was from 1.0 mm to 2.0 mm.
Very bad (C): When the lifting distance exceeded 2.0 mm.

[Table 1]

Table 1

| | Monomer Composition | | | | | Crosslinking Agent | | Gel Fraction [wt%] | Resistance Ratio | Average Air Bubble Diameter [mm] | Optical Characteristics | | Repulsion Resistance | |
|---|---|---|---|---|---|---|---|---|---|---|---|---|---|---|
| | Composition Ratio (weight ratio) | m1 | m2 | m3 | m4 | Kind | Amount [parts by weight] | | | | Total Light Transmittance [%] | Haze [%] | Lifting Distance [mm] | Rating |
| Ex. 1 | 2EHA/NVP/HEAA =70.5/26/3.5 | 70.5 | 26 | 3.5 | | HDDA | 0.015 | 65 | 99 | 0 | 92.1 | 0.5 | 0.3 | A |
| Ex. 2 | 2EHA/NVP/HEAA =86/12.5/1.5 | 86 | 12.5 | 1.5 | | C/L | 0.25 | 61 | 100 | 0 | 92.2 | 0.7 | 0.7 | A |
| Ex. 3 | 2EHA/DEAA/NVP/ HEAA/N-MAM=70/12/15/1.5/1.5 | 70 | 27 | 3 | | C/L | 0.25 | 62 | 100 | 0.40 | 92.0 | 0.8 | 0.2 | A |
| Comp. Ex 1 | 2EHA/AA=91/9 | 91 | | | 9 | HDDA | 0.05 | 72 | 123 | 0.35 | 92.3 | 0.4 | 1.5 | B |
| Comp. Ex. 2 | 2EHA=100 | 100 | | | | HDDA | 0.15 | 82 | 103 | 5 | 92.3 | 0.5 | 22 | C |
| Comp. Ex. 3 | 2EHA/NVP=84/16 | 84 | 16 | | | HDDA | 0.06 | 65 | 101 | 3 | 92.2 | 0.4 | 1.7 | B |
| Comp. EX. 4 | 2EHA/HEAA=95/5 | 95 | | 5 | | HDDA | 0.08 | 43 | 102 | 2.5 | 92.1 | 9.9 | 29 | C |

In Table 1, the "resistance ratio" is the "converted value of the resistance value after standing still for 2 weeks in an environment of a temperature of 60°C and 95% RH, which was converted assuming that the initial resistance value of the measurement sample is 100, as determined in the corrosion resistance test", and the "average air bubble diameter" is the "average air bubble diameter of air bubbles determined by the bubbling delamination resistance test". Also, "2EHA" is "2-ethylhexyl acrylate"; "NVP" is "N-vinyl-2-pyrrolidone"; "HEAA" is "N-hydroxyethylacrylamide"; "DEAA" is "N,N-diethylacrylamide"; and "N-MAM" is "N-hydroxymethylacrylamide". Furthermore, "HDDA" is "1,6-hexanediol diacrylate", and "C/L" is "a reaction product of trimethylolpropane and tolylene diisocyanate ("CORONATE L", trade name, produced by Nippon Polyurethane Industry Co., Ltd.)".

As seen above, in Examples, the resistance ratio falls in the specific range and as for the average air bubble diameter of air bubbles, bubbling is not observed at all or within the specific range, revealing that both high corrosion resistance and adhesion reliability are satisfied. Also, the repulsion resistance is good. Furthermore, in Examples, the total light transmittance is 90% or more and the haze is 1.5% or less, revealing that the transparency is also excellent. Incidentally, in Examples, "delamination" or "lifting" was not generated in the bubbling delamination test.

While the present invention has been described in detail and with reference to specific embodiments thereof, it will be apparent to one skilled in the art that various changes and modifications can be made therein without departing from the spirit and scope of the present invention. This application is based on Japanese Patent Application (Patent Application No. 2009-265860) filed on November 24, 2009, the contents of which are incorporated herein by way of reference.

## INDUSTRIAL APPLICABILITY

The double-coated pressure-sensitive adhesive sheet for optical use of the present invention satisfies both high corrosion resistance and adhesion reliability and therefore can be suitably used for optical applications, for example, an application in laminating together various optical members (various optical functional layers) or an application in fixing various optical members (various optical functional layers) to a predetermined site.

## DESCRIPTION OF REFERENCE NUMERALS AND SIGNS

11 Electrically conductive film
12 Silver layer (silver electric part)
13 Test piece
14 Tester
21 Resin plate
22 Pressure-sensitive adhesion sheet
23 Transparent electrically conductive film
24 Glass
25 Image display panel
26 Polyethylene terephthalate film (PET film)
41 Polyethylene terephthalate film (PET film)
42 Pressure-sensitive adhesion sheet
43 Transparent electrically conductive PET film
44 Electrically conductive layer
45 Resin plate

## Claims

1. A double-coated pressure-sensitive adhesive sheet for optical use, comprising a pressure-sensitive adhesive layer having a resistance ratio determined by the following corrosion resistance test of from 90 to 120 and an average air bubble diameter of air bubbles determined by the following bubbling delamination resistance test of 1.0 mm or less:

   Corrosion resistance test:

      a silver layer is formed in 15 mm at longitudinal both ends of an electrically conductive film (size: 70 mm (length) x 25 mm (width)) to prepare an electrically conductive film having silver layers: the pressure-sensitive adhesive sheet (size: 50 mm (length) x 20 mm (width)) is attached to a center part of said electrically

conductive film having silver layers such that an area of contact with one silver layer and an area of contact with another silver layer become the same on a pressure-sensitive adhesive surface provided by the above pressure-sensitive adhesive layer, to prepare a specimen; said specimen is measured for an initial resistance value between silver layers, then said specimen is left standing still for 2 weeks in an environment of a temperature of 60°C and a humidity of 95% RH, and thereafter measured for a resistance value between silver layers after standing still; and a converted value of the resistance value between silver layers after standing still, which is converted assuming that the initial resistance value between silver layers is 100, is taken as the resistance ratio;

Bubbling delamination resistance test:

a 50 μm-thick polyethylene terephthalate film is attached to one pressure-sensitive adhesive surface of the pressure-sensitive adhesive sheet so that the above pressure-sensitive adhesive layer can provide a pressure-sensitive adhesive surface, to prepare a test piece; the test piece is attached to an acrylic plate subjected to a scratch resistance treatment, by pressure-bonding under a pressure of from 0.01 to 1.00 MPa in a form of a scratch resistance-treated surface of the acrylic plate being put into contact with the pressure-sensitive adhesive surface provided by said pressure-sensitive adhesive layer, to obtain a construct where the acrylic plate subjected to the scratch resistance treatment and the 50 μm-thick polyethylene terephthalate film are joined through the pressure-sensitive adhesive sheet; and said construct is left standing still for 1 day in un environment of 50°C, further left standing still for 4 days in an environment of 80°C, and determined for an average air bubble diameter of air bubbles generated at an interface between the scratch resistance-treated surface of the acrylic plate and said pressure-sensitive adhesive layer, provided that when no air bubble is produced, the average air bubble diameter is 0.

**2.** The double-coated pressure-sensitive adhesive sheet for optical use according to claim 1, having a total light transmittance of 90% or more and a haze of 1.5% or less.

**3.** The double-coated pressure-sensitive adhesive sheet for optical use according to claim 1 or 2, wherein said pressure-sensitive adhesive layer is an acrylic pressure-sensitive adhesive layer.

**4.** The double-coated pressure-sensitive adhesive sheet for optical use according to claim 3, wherein said pressure-sensitive adhesive layer is formed of an acrylic polymerizable composition containing a monomer mixture or a partial polymerization product thereof, the monomer mixture containing the following monomer (m1), the following monomer (m2) and the following monomer (m3) or containing the following monomer (m1), the following monomer (m2), the following monomer (m3) and the following monomer (m4), with the monomer contents of from 35 to 97.5 wt% of monomer (m1), from 2 to 40 wt% of monomer (m2), from 0.1 to 25 wt% of monomer (m3) and from 0 to 30 wt% of monomer (m4):

(m1) an alkyl (meth)acrylate monomer having an alkyl group with a carbon number of 1 to 12, represented by the following formula (1):

[Chem. 1] $CH_2=C(R^1)COOR^2$ (1)

(in formula (1), $R^1$ represents a hydrogen atom or a methyl group, and $R^2$ represents an alkyl group having a carbon number of 1 to 12);
(m2) a vinyl monomer having a nitrogen atom in its skeleton (excluding monomer (m3));
(m3) an N-hydroxyalkyl(meth)acrylamide monomer having a hydroxyalkyl group with a carbon number of 1 to 4; and
(m4) a monomer copolymerizable with said monomer (m1) to monomer (m3).

**5.** The double-coated pressure-sensitive adhesive sheet for optical use according to claim 4, wherein said (m2) vinyl monomer having a nitrogen atom in its skeleton is one or two or more monomers selected from an N-vinyl cyclic amide represented by the following formula (2) and (meth)acrylamides:

[Chem. 2]

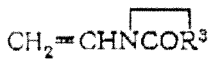 (2)

(in formula (2), $R^3$ represents a divalent organic group).

**6.** The double-coated pressure-sensitive adhesive sheet for optical use according to claim 4 or 5, wherein said (m3) N-hydroxyalkyl(meth)acrylamide monomer having a hydroxyalkyl group with a carbon number of 1 to 4 is a monomer represented by the following formula (3):

[Chem. 3] $CH_2=C(R^4)CONR^5R^6$ (3)

(in formula (3), $R^4$ represents a hydrogen atom or a methyl group, $R^5$ represents a hydroxyalkyl group having a carbon number of 1 to 4, and $R^6$ represents a hydrogen atom or a saturated or unsaturated hydrocarbon group having a carbon number of 1 to 10).

**7.** The double-coated pressure-sensitive adhesive sheet for optical use according to any one of claims 4 to 6, wherein said monomer mixture of said acrylic polymerizable composition contains substantially no carboxyl group-containing monomer.

**8.** The double-coated pressure-sensitive adhesive sheet for optical use according to any one of claims 3 to 7, wherein said acrylic pressure-sensitive adhesive layer has a gel fraction of from 20 to 90 wt%.

FIG. 1

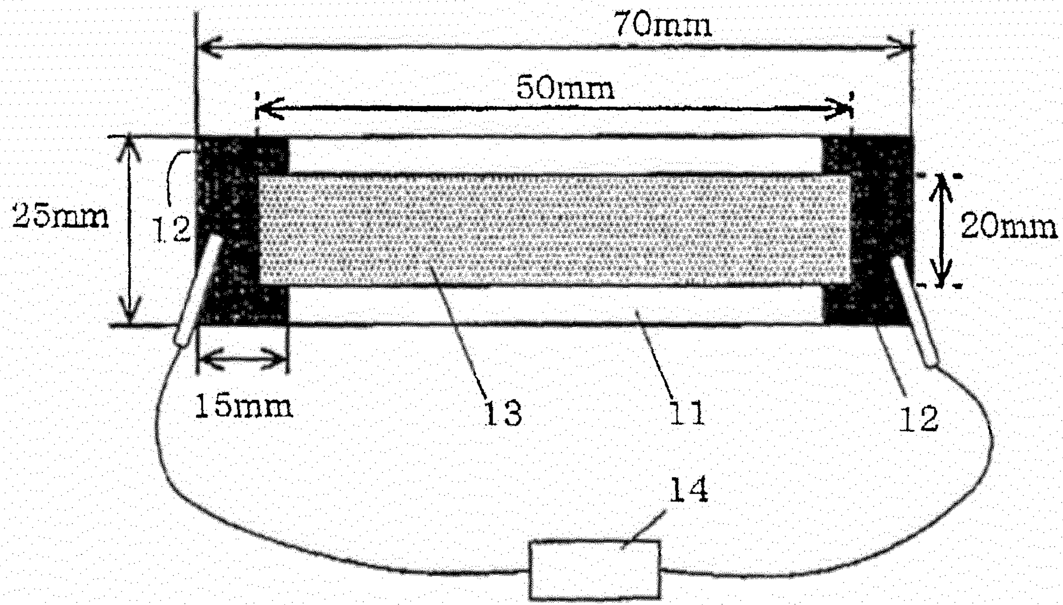


FIG. 2

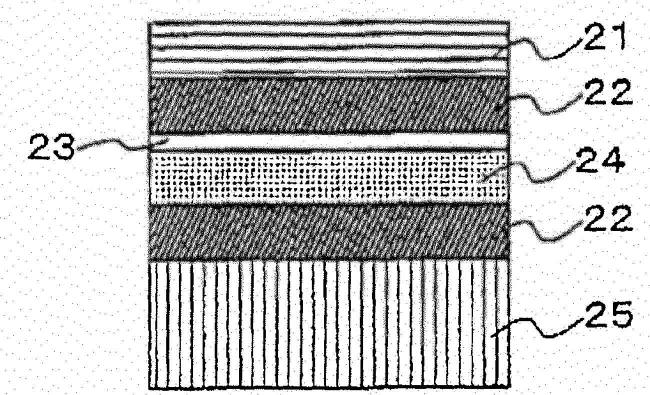


FIG. 3

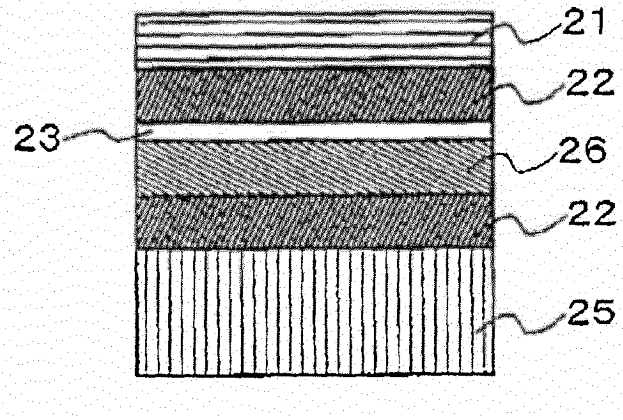

FIG. 4

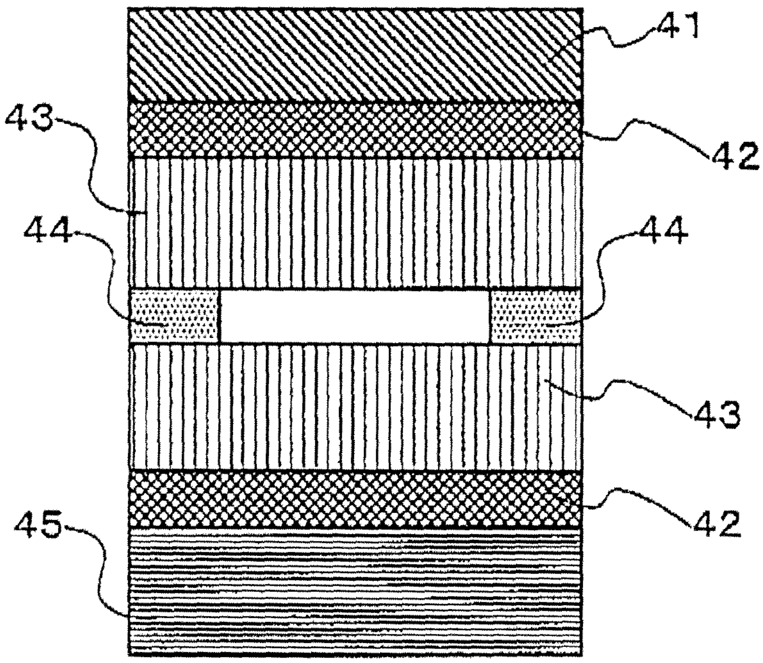

**INTERNATIONAL SEARCH REPORT**

International application No.
PCT/JP2010/070843

A. CLASSIFICATION OF SUBJECT MATTER
*C09J7/02*(2006.01)i, *C09J133/06*(2006.01)i, *C09J157/12*(2006.01)i, *C09J201/00*(2006.01)i, *G02B5/30*(2006.01)i

According to International Patent Classification (IPC) or to both national classification and IPC

B. FIELDS SEARCHED

Minimum documentation searched (classification system followed by classification symbols)
C09J7/02, C09J133/06, C09J157/12, C09J201/00, G02B5/30

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2007/111138 A1 (Nitto Denko Corp.), 04 October 2007 (04.10.2007), claims 1, 3, 5, 6; paragraphs [0021], [0028], [0030], [0034]; examples 7 to 8; table 1 & JP 2007-264092 A & US 2009/0104445 A1 & KR 10-2008-0088655 A & CN 101395506 A | 1-8 |
| X | JP 2001-341241 A (Toray Industries, Inc.), 11 December 2001 (11.12.2001), claims 1 to 2; paragraph [0070]; example 6; table 1 (Family: none) | 1-4,6,8 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22 December, 2010 (22.12.10) | 11 January, 2011 (11.01.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

INTERNATIONAL SEARCH REPORT

International application No.
PCT/JP2010/070843

C (Continuation). DOCUMENTS CONSIDERED TO BE RELEVANT

| Category* | Citation of document, with indication, where appropriate, of the relevant passages | Relevant to claim No. |
|---|---|---|
| P,X | WO 2010/064623 A1 (Nitto Denko Corp.), 10 June 2010 (10.06.2010), claims 1, 2, 4, 5; paragraph [0084]; examples 1 to 4; table 1 & JP 2010-155974 A | 1-8 |
| P,X | JP 2010-189545 A (Nitto Denko Corp.), 02 September 2010 (02.09.2010), claims 1, 2, 5, 7; examples 8, 11; table 1 & US 2010/0209703 A & CN 101805566 A & KR 10-2010-0094403 A | 1-8 |

Form PCT/ISA/210 (continuation of second sheet) (July 2009)

**INTERNATIONAL SEARCH REPORT**

International application No.
PCT/JP2010/070843

Although claims 1-3 and 8 include adhesive sheets which comprise any (acrylic) pressure-sensitive adhesive layer that has such desired characteristics as a resistance ratio of 90-120 as determined by a specific corrosion resistance test and an average air bubble diameter of not more than 1.0 mm as determined by a specific foaming separation resistance test, only adhesive sheets which comprise an (acrylic) pressure-sensitive adhesive layer that has a specific composition defined in the description are disclosed within the meaning of PCT Article 5. Consequently, claims 1-3 and 8 are not fully supported within the meaning of PCT Article 6.

In addition, it is not clear for a person skilled in the art what kind of compositions are included and what kind of compositions are not included in the (acrylic) pressure-sensitive adhesive layer that has the above-mentioned desired characteristics. Consequently, claims 1-3 and 8 also fail to satisfy the requirement of clearness prescribed under PCT Article 6.

This international search report therefore covers those supported and disclosed by the description, namely adhesive sheets which comprise an (acrylic) pressure-sensitive adhesive layer that has one of the compositions defined in claims 4-7.

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005298723 A
- JP 2005314453 A
- JP 2006290960 A
- JP 5107410 A
- JP 2009265860 A